# EUROPEAN PATENT APPLICATION

(11) **EP 4 678 467 A1**
(43) Date of publication of application: **14.01.2026**
(21) Application number: 24766654.8
(22) Date of filing: 09.01.2024
(51) Int. Cl.: B60L 58/27, B60L 9/18, B60L 50/60

(54) **HEAT MANAGEMENT SYSTEM**

(30) Priority: 09.03.2023 JP 2023036648; 21.11.2023 JP 2023197455
(71) Applicant: TOYOTA JIDOSHA KABUSHIKI KAISHA, Toyota-shi, Aichi-ken, 471-8571 (JP)
(72) Inventor: SUZUKI, Tomoaki, Toyota-shi, Aichi 471-8571 (JP)
(74) Representative: D Young & Co LLP
(86) International application number: PCT/JP2024/000143
(87) International publication number: WO 2024/185279

(57) **Abstract**

An object is to provide a thermal management system capable of achieving both effective use of heat generated from a drive device and efficient temperature rise in a power storage device. A thermal management system (1) includes: a power storage device (173) that exchanges heat with a first flow path (170b); a drive device (133) that exchanges heat with a second flow path (130b); a radiator (122) provided in a third flow path (130a); a chiller (160) provided in a fourth flow path (170a); and a switching device (180, 190). When the power storage device (173) is raised in temperature, the switching device disconnects the third flow path from other flow paths, forms a circuit in which a heat medium circulates through the first flow path and the second flow path, and forms a circuit in which the heat medium circulates through the fourth flow path.

## Description

### TECHNICAL FIELD

The present disclosure relates to a thermal management system.

### BACKGROUND ART

Japanese Patent Laying-Open No. 2010-272395 (PTL 1) discloses an electrically powered vehicle. The electrically powered vehicle includes a power storage device (a battery), an inverter, a motor, and a controller. The power storage device is connected to the inverter. The inverter is connected to the motor. The controller controls switching of the inverter to control the current in the power storage device. Thereby, the controller controls the heat generated due to the power loss in an internal resistance in the power storage device. As a result, the controller can perform temperature rise control (self-heating of the power storage device) to raise the temperature of the power storage device by the current in the power storage device.

### CITATION LIST

### PATENT LITERATURE

PTL 1: Japanese Patent Laying-Open No. 2010-272395

### SUMMARY OF INVENTION

### TECHNICAL PROBLEM

In electrical equipment such as an electrically powered vehicle, it may be important to effectively utilize the heat generated in a drive device including an inverter and a motor. Further, it is desired to efficiently raise the temperature of a power storage device.

An object of the present disclosure is to provide a thermal management system capable of achieving both effective use of heat generated from a drive device and efficient temperature rise in a power storage device.

### SOLUTION TO PROBLEM

A thermal management system according to a first aspect of the present disclosure is a thermal management system provided in electrical equipment, the thermal management system including: a first flow path, a second flow path, a third flow path, and a fourth flow path, a heat medium being able to flow through the first flow path, the second flow path, the third flow path, and the fourth flow path; a power storage device that exchanges heat with the heat medium flowing through the first flow path; a drive device that exchanges heat with the heat medium flowing through the second flow path to supply drive power to the electrical equipment; a radiator provided in the third flow path; a chiller provided in the fourth flow path; and a switching device that is capable of switching a state of connection between the first flow path, the second flow path, the third flow path, and the fourth flow path. When the power storage device is raised in temperature, the switching device disconnects the third flow path from other flow paths, forms a circuit in which the heat medium circulates through the first flow path and the second flow path, and forms a circuit in which the heat medium circulates through the fourth flow path.

A thermal management system according to a second aspect of the present disclosure is a thermal management system provided in electrical equipment, the thermal management system including: a compressor that compresses a working medium; an expansion valve that expands the working medium discharged from the compressor; a heat exchanger that exchanges heat between the working medium discharged from the expansion valve and a heat medium; a first circulation flow path through which the working medium circulates, the first circulation flow path connecting in an order of the compressor, the expansion valve, and the heat exchanger; and a power storage device connected to the first circulation flow path to exchange heat with the working medium flowing through a portion between the compressor and the expansion valve in the first circulation flow path; a power storage device bypass flow path connected to the first circulation flow path to bypass the power storage device; a condenser that condenses the working medium discharged from the compressor, the condenser being provided in the power storage device bypass flow path; a pump that pressurizes the heat medium discharged from the heat exchanger; a radiator that cools the heat medium discharged from the pump; a second circulation flow path through which the heat medium circulates, the second circulation flow path connecting in an order of the heat exchanger, the pump, and the radiator; a drive device that supplies drive power to the electrical equipment, the drive device being connected to the second circulation flow path to exchange heat with the heat medium flowing through a portion between the radiator and the heat exchanger in the second circulation flow path; a radiator bypass flow path connected to the second circulation flow path to bypass the radiator; and a switching device that is capable of switching a flow path through which the working medium flows and switching a flow path through which the heat medium flows. When the power storage device is raised in temperature, the switching device disconnects the power storage device bypass flow path from the first circulation flow path, and disconnects the radiator from the second circulation flow path, and the compressor is activated upon satisfaction of a heat receiving condition on which the working medium receives heat from the heat medium in the heat exchanger.

A thermal management system according to a third aspect of the present disclosure is a thermal management system provided in electrical equipment, the thermal management system including: a first flow path, a second flow path, a third flow path, and a fourth flow path, a heat medium being able to flow through the first flow path, the second flow path, the third flow path, and the fourth flow path; a power storage device that exchanges heat with the heat medium flowing through the first flow path; a drive device that exchanges heat with the heat medium flowing through the second flow path to supply drive power to the electrical equipment; a radiator provided in the third flow path; a chiller provided in the fourth flow path; and a switching device that is capable of switching a state of connection between the first flow path, the second flow path, the third flow path, and the fourth flow path. The first flow path and the second flow path are connected to the switching device to be parallel to each other. When the power storage device is raised in temperature, the switching device forms a first circuit in which the heat medium circulates through the first flow path and the switching device, forms a second circuit in which the heat medium circulates through the second flow path and the switching device, and disconnects each of the third flow path and the fourth flow path from the first circuit and the second circuit.

### ADVANTAGEOUS EFFECTS OF INVENTION

According to the present disclosure, it is possible to provide a thermal management system capable of achieving both effective use of the heat generated from a drive device and efficient self-heating of a power storage device.

### BRIEF DESCRIPTION OF DRAWINGS

Fig. 1 is a diagram schematically showing an electrically powered vehicle equipped with a thermal management system in a first embodiment of the present disclosure.
Fig. 2 is a diagram showing a configuration of the thermal management system in the first embodiment.
Fig. 3 is a diagram showing a configuration of a thermal management circuit in the thermal management system.
Fig. 4 is a diagram schematically showing a warming mode of the thermal management circuit during a temperature rise in a battery.
Fig. 5 is a diagram schematically showing a disconnection mode of the thermal management circuit.
Fig. 6 is a flowchart illustrating control details of the thermal management system.
Fig. 7 is a diagram schematically showing a radiator disconnection mode of the thermal management circuit.
Fig. 8 is a diagram showing a configuration of a thermal management system in a second embodiment of the present disclosure.
Fig. 9 is a diagram showing a configuration of a thermal management circuit in the thermal management system.
Fig. 10 is a diagram schematically showing a warming mode of the thermal management circuit during a temperature rise in a battery.
Fig. 11 is a diagram showing a configuration of a thermal management system in a third embodiment of the present disclosure.
Fig. 12 is a diagram showing a configuration of a thermal management circuit in the thermal management system.
Fig. 13 is a diagram schematically showing a warming mode of the thermal management circuit during a temperature rise in a battery.
Fig. 14 is a diagram schematically showing a disconnection mode of the thermal management circuit.
Fig. 15 is a diagram schematically showing a radiator disconnection mode of the thermal management circuit.
Fig. 16 is a diagram showing a configuration of a thermal management circuit in a fourth embodiment of the present disclosure.
Fig. 17 is a diagram showing a circuit configuration including a battery, a converter, an inverter, and a motor.
Fig. 18 is a diagram showing a configuration of a thermal management circuit in a fifth embodiment of the present disclosure.
Fig. 19 is a diagram showing a configuration of a thermal management circuit in a sixth embodiment of the present disclosure.

### DESCRIPTION OF EMBODIMENTS

Hereinafter, the first embodiment of the present disclosure will be described in detail with reference to the accompanying drawings, in which the same or corresponding portions are denoted by the same reference characters, and the description thereof will not be repeated.

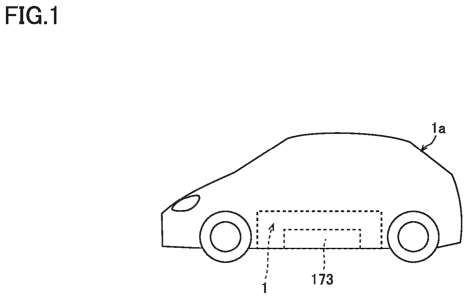

The following describes an example of a configuration in which a thermal management system according to the present disclosure is mounted in an electrically powered vehicle 1a (see Fig. 1). Electrically powered vehicle 1a is preferably a vehicle on which a battery 173 for traveling is mounted and is, for example, a battery electric vehicle (BEV). Electrically powered vehicle 1a may be a hybrid electric vehicle (HEV), a plug-in hybrid electric vehicle (PHEV), or a fuel cell electric vehicle

(FCEV). However, the intended use of the thermal management system according to the present disclosure is not limited to that for vehicles. Electrically powered vehicle 1a is an example of the "electrical equipment" in the present disclosure.

### [First Embodiment]

### <Overall Configuration>

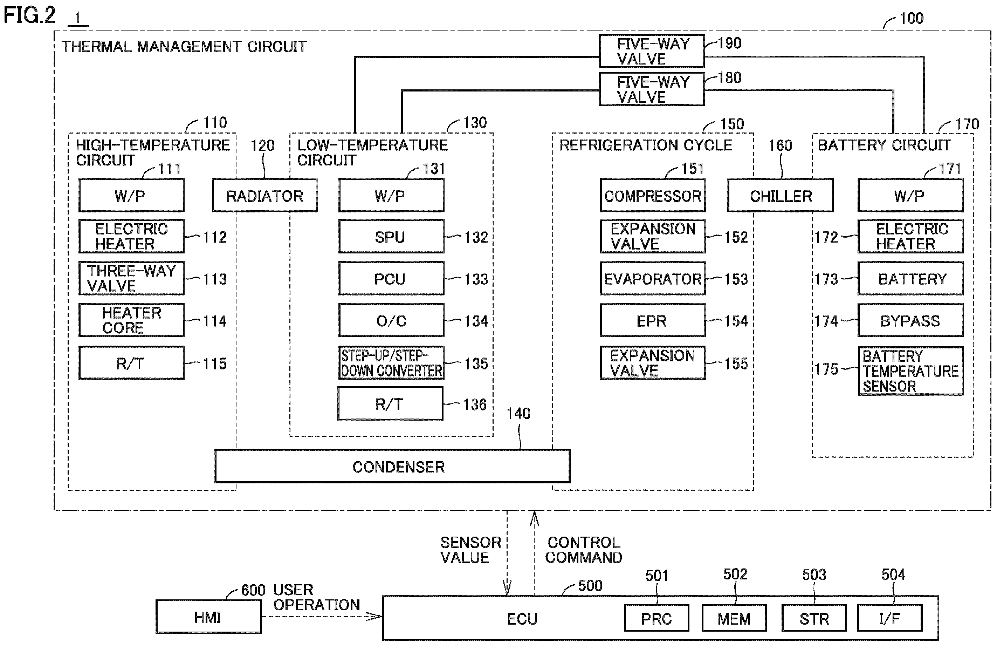

Fig. 2 is a diagram showing an example of an overall configuration of a thermal management system 1 according to the first embodiment in the present disclosure. Thermal management system 1 includes a thermal management circuit 100, an electronic control unit (ECU) 500, and a human machine interface (HMI) 600. ECU 500 is an example of the "controller" in the present disclosure.

Thermal management circuit 100 is configured such that a medium (water or the like) for heat exchange circulates therethrough. As shown in Fig. 2, thermal management circuit 100 includes, for example, a high-temperature circuit 110, a radiator 120, a low-temperature circuit 130, a condenser 140, a refrigeration cycle 150, a chiller 160, a battery circuit 170, and five-way valves 180 and 190. Each of five-way valves 180 and 190 is an example of the "switching device" in the present disclosure.

High-temperature circuit 110 includes, for example, a water pump (W/P) 111, an electric heater 112, a three-way valve 113, a heater core 114, a reservoir tank (R/T) 115, and a heat medium (water or the like) (not shown).

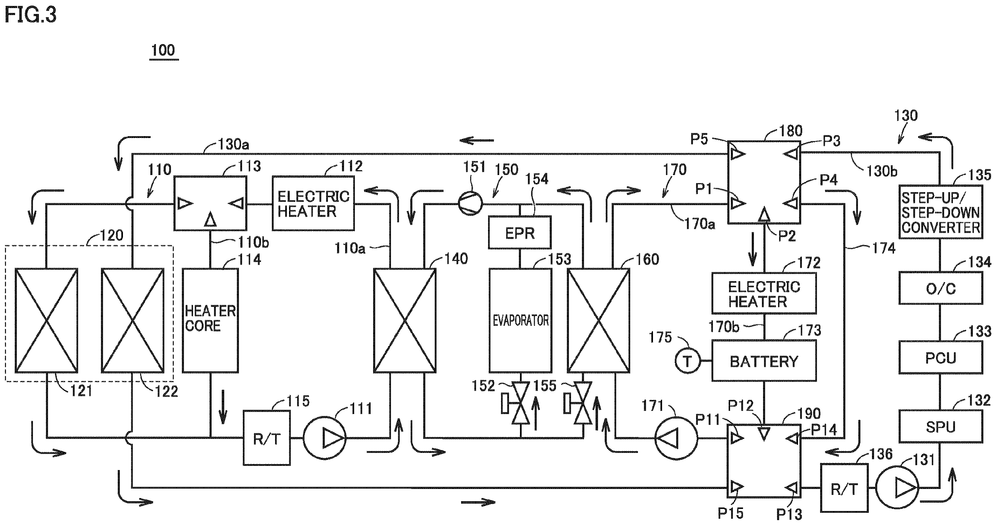

Radiator 120 is connected to (i.e., shared among) both high-temperature circuit 110 and low-temperature circuit 130. Radiator 120 includes a high-temperature (HT) radiator 121 (see Fig. 3) and a low-temperature (LT) radiator 122 (see Fig. 3). Low-temperature radiator 122 is an example of the "radiator" in the present disclosure.

Low-temperature circuit 130 includes, for example, a water pump 131, a smart power unit (SPU) 132, a power control unit (PCU) 133, an oil cooler (O/C) 134, a step-up/step-down converter 135, a reservoir tank 136, and a heat medium (water or the like) (not shown) . PCU 133 and oil cooler 134 are an example of the "drive device" in the present disclosure.

Condenser 140 is connected to both high-temperature circuit 110 and refrigeration cycle 150.

Refrigeration cycle 150 includes, for example, a compressor 151, an expansion valve 152, an evaporator 153, an evaporative pressure regulator (EPR) 154, an expansion valve 155, and a working medium (water, a medium lower in boiling point than water, or the like) (not shown).

Chiller 160 is connected to both refrigeration cycle 150 and battery circuit 170.

Battery circuit 170 includes, for example, a water pump 171, an electric heater 172, a battery 173, a bypass path 174, and a battery temperature sensor 175. Water pump 171 and battery 173 are examples of the "pump" and the "power storage device", respectively, in the present disclosure.

Each of five-way valves 180 and 190 is connected to low-temperature circuit 130 and battery circuit 170. The configuration of thermal management circuit 100 will be described later in detail with reference to Fig. 3.

ECU 500 controls thermal management circuit 100. ECU 500 includes a processor 501, a memory 502, a storage 503, and an interface 504.

Processor 501 is, for example, a central processing unit (CPU) or a micro-processing unit (MPU). Memory 502 is, for example, a random access memory (RAM). Storage 503 is a rewritable nonvolatile memory such as a hard disk drive (HDD), a solid state drive (SSD), and a flash memory. Storage 503 stores a system program including an operating system (OS) and a control program including computer-readable codes necessary for a control operation. Processor 501 reads the system program and the control program, loads these programs onto memory 502, and executes these programs to thereby implement various processes. Interface 504 controls communication between ECU 500 and components constituting thermal management circuit 100.

ECU 500 generates a control command based on the sensor values acquired from various sensors (for example, battery temperature sensor 175) included in thermal management circuit 100, the user operation received by HMI 600, and the like. Then, ECU 500 outputs the generated control command to thermal management circuit 100. ECU 500 may be divided into a plurality of ECUs for each function. Fig. 2 shows an example in which ECU 500 includes one processor 501, but ECU 500 may include a plurality of processors. The same also applies to memory 502 and storage 503.

In the present specification, the "processor" is not limited to a processor in a narrow sense that performs processing in a stored-program scheme, and may include a hardwired circuit such as an application specific integrated circuit (ASIC) and a field-programmable gate array (FPGA). Thus, the term "processor" can also be interchangeably read as processing circuitry for which processing is defined in advance by computer readable codes and/or a hardwired circuit.

HMI 600 is a display equipped with a touch panel, an operation panel, a console, or the like. HMI 600 receives a user operation for controlling thermal management system 1. HMI 600 outputs a signal indicating the user operation to ECU 500.

### <Configuration of Thermal Management Circuit>

Fig. 3 is a diagram showing an example of a configuration of thermal management circuit 100 according to the first embodiment. As shown in Fig. 3, high-temperature circuit 110 includes: a flow path 110a that connects water pump 111, condenser 140, electric heater 112, three-way valve 113, high-temperature radiator 121, reservoir tank 115, and water pump 111 in this order; and a flow path 110b that connects three-way valve 113, heater core 114, and reservoir tank 115 in this order.

The heat medium (for example, water) in high-temperature circuit 110 flows through at least one of a first path and a second path. The first path passes through water pump 111, condenser 140, electric heater 112, three-way valve 113, heater core 114, reservoir tank 115, and water pump 111 in this order. The second path passes through water pump 111, condenser 140, electric heater 112, three-way valve 113, high-temperature radiator 121, reservoir tank 115, and water pump 111 in this order. Three-way valve 113 switches the flow path of the heat medium such that the heat medium flows through at least one of the first path and the second path.

Water pump 111 causes the heat medium to circulate through high-temperature circuit 110 according to the control command from ECU 500. Condenser 140 exchanges heat between the heat medium and the working medium in refrigeration cycle 150. Electric heater 112 heats the heat medium. Heater core 114 heats, by a heat medium, the air supplied to a vehicle compartment (not shown) in electrically powered vehicle 1a. Reservoir tank 115 stores a part of the heat medium inside high-temperature circuit 110 to maintain the pressure and the amount of the heat medium inside high-temperature circuit 110.

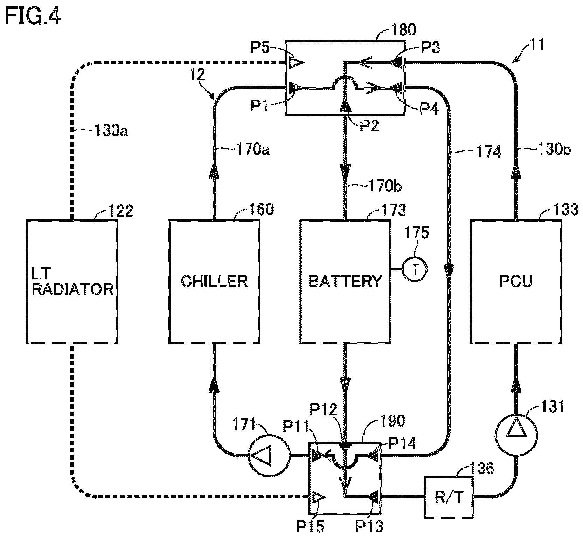

As shown in Figs. 3 and 4, low-temperature circuit 130 includes: a flow path 130a that connects five-way valve 180, low-temperature radiator 122, and five-way valve 190 in this order; and a flow path 130b that connects five-way valve 190, reservoir tank 136, water pump 131, SPU 132, PCU 133, oil cooler 134, step-up/step-down converter 135, and five-way valve 180 in this order. Flow path 130b is in thermal contact with SPU 132, PCU 133, oil cooler 134, and step-up/step-down converter 135. Flow path 130a is an example of the "third flow path" in the present disclosure, and flow path 130b is an example of the "second flow path" in the present disclosure.

The heat medium (for example, water) in low-temperature circuit 130 flows through a path passing through water pump 131, SPU 132, PCU 133, oil cooler 134, step-up/step-down converter 135, five-way valve 180, low-temperature radiator 122, five-way valve 190, reservoir tank 136, and water pump 131 in this order.

Water pump 131 causes the heat medium to circulate through low-temperature circuit 130 according to the control command from ECU 500. SPU 132 controls charging and discharging of battery 173 according to the control command from ECU 500. According to the control command from ECU 500, PCU 133 converts direct-current (DC) power supplied from battery 173 into alternating-current (AC) power, and supplies the converted AC power to a motor (not shown) incorporated in a transaxle. Oil cooler 134 causes the lubricating oil for the motor to circulate with use of an electrical oil pump (EOP) (not shown). Oil cooler 134 cools the transaxle by heat exchange between the heat medium circulating through low-temperature circuit 130 and the lubricating oil for the motor. SPU 132, PCU 133, oil cooler 134, and step-up/step-down converter 135 are cooled by the heat medium circulating through low-temperature circuit 130. Reservoir tank 136 stores a part of the heat medium in low-temperature circuit 130 to thereby maintain the pressure and the amount of the heat medium in low-temperature circuit 130. Each of five-way valves 180 and 190 switches the path of the heat medium in low-temperature circuit 130 and battery circuit 170 according to the control command from ECU 500. Low-temperature radiator 122 is disposed in the vicinity of high-temperature radiator 121. The heat medium flowing through low-temperature radiator 122 exchanges heat with the heat medium flowing through high-temperature radiator 121. In place of oil cooler 134, the above-mentioned transaxle may be provided in low-temperature circuit 130.

The working medium in refrigeration cycle 150 flows through at least one of a first path and a second path. The first path passes through compressor 151, condenser 140, expansion valve 152, evaporator 153, EPR 154, and compressor 151 in this order. The second path passes through compressor 151, condenser 140, expansion valve 155, chiller 160, and compressor 151 in this order. Expansion valves 152 and 155 switch the flow path of the working medium such that the working medium flows through at least one of the first path and the second path.

Compressor 151 compresses the gas-phase working medium having flowed out of chiller 160. Condenser 140 condenses the working medium by exchanging heat between the gas-phase working medium discharged from compressor 151 and the heat medium flowing through high-temperature circuit 110. Expansion valves 152 and 155 expand the working medium having flowed out of condenser 140. Evaporator 153 evaporates the working medium by exchanging heat between the working medium having flowed out of expansion valve 152 and the air supplied to a vehicle compartment in the electrically powered vehicle. Evaporative pressure regulator 154 regulates the pressure of the working medium having flowed out of evaporator 153.

As shown in Figs. 3 and 4, battery circuit 170 includes: a flow path 170a that connects five-way valve 190, water pump 171, chiller 160, and five-way valve 180 in this order; and a flow path 170b that connects five-way valve 180, electric heater 172, battery 173, and five-way valve 190 in this order. Flow path 170b is in thermal contact with battery 173. Flow path 170a is an example of the "fourth flow path" in the present disclosure, and flow path 170b is an example of the "first flow path" in the present disclosure.

The heat medium in battery circuit 170 (the same heat medium as that flowing through low-temperature circuit 130) flows through at least one of a first path and a second path. The first path passes through water pump 171, chiller 160, five-way valve 180, electric heater 172, battery 173, five-way valve 190, and water pump 171 in this order. The second path passes through water pump 171, chiller 160, five-way valve 180, bypass path 174, five-way valve 190, and water pump 171 in this order. Five-way valves 180 and 190 switch the first path and the second path such that the heat medium flows through at least one of the first path and the second path.

Water pump 171 causes the heat medium to circulate through battery circuit 170 according to the control command from ECU 500. Chiller 160 cools the heat medium circulating through battery circuit 170 by exchanging heat between the working medium circulating through refrigeration cycle 150 and the heat medium circulating through battery circuit 170. Electric heater 172 heats the heat medium according to the control command from ECU 500. Battery 173 supplies electric power for traveling to a motor incorporated in the transaxle. Battery 173 can be driven such that battery 173 is raised in temperature. This control (hereinafter referred to as temperature rise control) is executed by ECU 500. Battery 173 may be heated by electric heater 172 or cooled by chiller 160. Bypass path 174 connects five-way valves 180 and 190 such that the heat medium bypasses electric heater 172 and battery 173. When the heat medium flows through bypass path 174, a temperature change in the heat medium resulting from heat absorption/heat dissipation between the heat medium and battery 173 is suppressed. Battery temperature sensor 175 detects the temperature of battery 173.

Five-way valve 180 is provided with five ports P1 to P5. Port P1 is an inlet port into which the heat medium flows from chiller 160. Port P2 is an outlet port from which the heat medium flows out toward electric heater 172 and battery 173 of battery circuit 170. Port P3 is an inlet port into which the heat medium flows that has passed through SPU 132, PCU 133, oil cooler 134, and step-up/step-down converter 135 of low-temperature circuit 130. Port P4 is an outlet port from which the heat medium flows out toward bypass path 174 of battery circuit 170. Port P5 is an outlet port from which the heat medium flows out toward low-temperature radiator 122.

Five-way valve 190 is provided with five ports P11 to P15. Port P11 is an outlet port from which the heat medium flows out toward chiller 160. Port P12 is an inlet port into which the heat medium flows that has passed through electric heater 172 and battery 173 of battery circuit 170. Port P13 is an outlet port from which the heat medium flows out toward SPU 132, PCU 133, oil cooler 134, and step-up/step-down converter 135 of low-temperature circuit 130. Port P14 is an inlet port into which the heat medium flows from bypass path 174 of battery circuit 170. Port P15 is an inlet port into which the heat medium flows from low-temperature radiator 122.

### <Mode>

Fig. 4 is a conceptual diagram showing an outline of a prescribed mode (which may be hereinafter referred to as a warming mode) in thermal management circuit 100, the prescribed mode being implemented by controlling five-way valves 180 and 190. Five-way valves 180 and 190 are controlled to switch the state of connection between flow paths 130a, 130b, 170a, and 170b, and bypass path 174. Thereby, thermal management circuit 100 is switched to a plurality of modes including the warming mode.

In this case, since the electrically powered vehicle may not be equipped with an engine, the heating target of the electrically powered vehicle may not be able to be heated with use of the waste heat of the engine. Thus, it may be important to effectively utilize the heat generated in the drive device including the inverter and the motor. Further, it is desired to efficiently execute self-heating of the power storage device. In other words, it is desired to efficiently execute self-heating of the power storage device while allowing effective use of the heat generated from the drive device.

Thus, in the first embodiment, ECU 500 controls five-way valves 180 and 190 such that the warming mode shown in Fig. 4 is set when battery 173 is raised in temperature. Specifically, in the temperature rise mode, five-way valve 180 serves to form: a path through which ports P1 and P4 communicate with each other; and a path through which ports P2 and P3 communicate with each other, and five-way valve 190 serves to form a path through which ports P11 and P14 communicate with each other, and a path through which ports P12 and P13 communicate with each other.

This results in formation of: a first closed circuit 11 (see Fig. 4) in which flow path 170b corresponding to the "first flow path" and flow path 130b corresponding to the "second flow path" are connected to each other; and a second closed circuit 12 in which flow path 170a corresponding to the "fourth flow path" and bypass path 174 are connected to each other, and also, flow path 130a corresponding to the "third flow path" is disconnected from other flow paths. In other words, low-temperature radiator 122 is disconnected from other circuits (in an independent state).

In the warming mode shown in Fig. 4, during the temperature rise control by ECU 500, i.e., during the self-heating by which battery 173 raises the temperature of battery 173 itself, the cooling of battery 173 by the heat medium flowing through second closed circuit 12 is suppressed, and the heat generated in PCU 133 and the above-mentioned transaxle (not shown) is effectively transmitted to battery 173 through the heat medium flowing through first closed circuit 11.

As a result, it becomes possible to achieve both effective use of the heat generated from the drive device such as PCU 133 and efficient self-heating of battery 173.

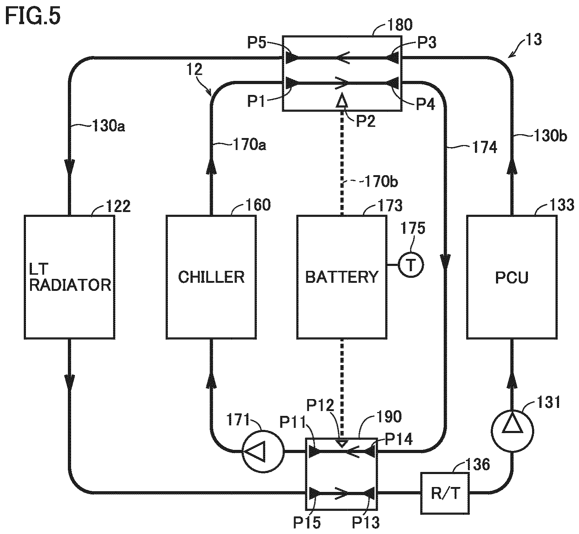

Further, during the temperature rise control for battery 173 in the warming mode, when the temperature of battery 173 (the value detected by battery temperature sensor 175) becomes higher than a set temperature Tc, ECU 500 controls five-way valves 180 and 190 such that the disconnection mode shown in Fig. 5 is set. Set temperature Tc is set to a temperature at which battery 173 can appropriately execute its function.

Specifically, in the disconnection mode, five-way valve 180 serves to form: a path through which ports P1 and P4 communicate with each other; and a path through which ports P3 and P5 communicate with each other, and also, five-way valve 190 serves to form: a path through which ports P11 and P14 communicate with each other; and a path through which ports P13 and P15 communicate with each other.

This results in formation of: second closed circuit 12 and a third closed circuit 13 (see Fig. 5) in which flow path 130b corresponding to the "second flow path" and flow path 130a corresponding to the "third flow path" are connected to each other, and also, flow path 170b corresponding to the "first flow path" is disconnected from other flow paths.

In the disconnection mode shown in Fig. 5, battery 173 is disconnected from other circuits when the temperature of battery 173 becomes higher than set temperature Tc. This suppresses excessive heating of battery 173 by supply of the heat to battery 173 through the heat medium, the heat having been generated in PCU 133 or the transaxle. Also, the heat generated in PCU 133 and the above-mentioned transaxle is appropriately discharged in low-temperature radiator 122.

### <Method of Controlling Thermal Management Circuit>

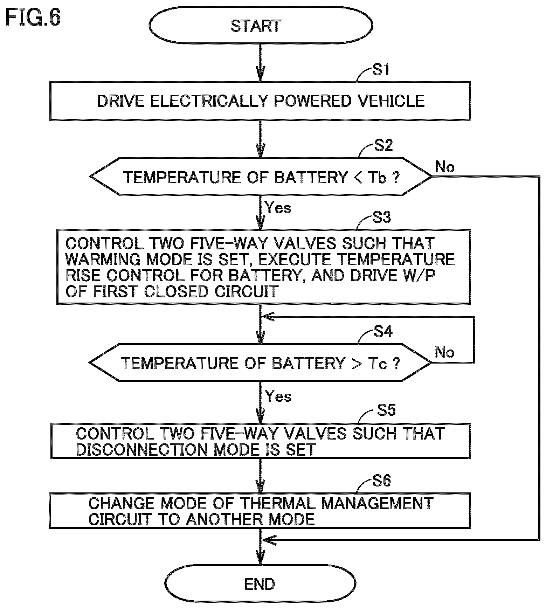

Next, a method of controlling thermal management system 1 will be described with reference to a flowchart shown in Fig. 6. Note that the flow shown in Fig. 6 is merely an example, and the control details in the present disclosure are not limited to the example shown in Fig. 6.

First, ECU 500 drives electrically powered vehicle 1a (activates a traveling system) (step S1). Specifically, when a start button (not shown) of electrically powered vehicle 1a is pressed, PCU 133 and battery 173 are electrically connected (by an SMR (not shown)). By receiving a prescribed internal signal in electrically powered vehicle 1a, ECU 500 detects that electrically powered vehicle 1a is driven.

ECU 500 determines whether or not battery 173 (the value detected by battery temperature sensor 175) is lower than a reference temperature Tb [°C] (step S2). Reference temperature Tb may be set, for example, at 10°C.

When the temperature of battery 173 is equal to or higher than reference temperature Tb (No in S2), ECU 500 ends the control. On the other hand, when the temperature of battery 173 is lower than reference temperature Tb (Yes in S2), ECU 500 controls each of five-way valves 180 and 190 such that thermal management circuit 100 is set in the warming mode shown in Fig. 4, executes the temperature rise control for battery 173, and drives water pump 131 of first closed circuit 11 (step S3).

Then, ECU 500 determines whether or not the temperature of battery 173 is higher than set temperature Tc (step S4). As a result, when the temperature of battery 173 is equal to or lower than set temperature Tc (No in S4), ECU 500 returns the process to step S4 again.

On the other hand, when the temperature of battery 173 is higher than set temperature Tc (Yes in S4), ECU 500 controls each of five-way valves 180 and 190 such that the disconnection mode is set (step S5). Thereby, the heat generated from the drive device such as PCU 133 is prevented from being supplied to battery 173 through the heat medium, so that excessive warming of battery 173 is suppressed.

Then, ECU 500 controls each of five-way valves 180 and 190 such that thermal management circuit 100 is set in another mode different from the disconnection mode (step S6).

As described above, in thermal management system 1 in the first embodiment, during the temperature rise control for battery 173, ECU 500 controls five-way valves 180 and 190 to form first closed circuit 11 in which flow paths 170b and 130b are connected to each other, to form second closed circuit 12 in which flow path 170a and bypass path 174 are connected to each other, and to disconnect flow path 130a from other flow paths. Thus, during the self-heating of battery 173, the cooling of battery 173 by the heat medium flowing through second closed circuit 12 is suppressed, and the heat generated in PCU 133 and the above-mentioned transaxle (not shown) is effectively supplied to battery 173 through the heat medium flowing through first closed circuit 11. This makes it possible to achieve both effective use of the heat generated from the drive device such as PCU 133 and efficient self-heating of battery 173.

Further, during the temperature rise control in the warming mode, ECU 500 may drive water pump 131 of first closed circuit 11, for example, at a low rotation speed enough to achieve the flow rate of the heat medium capable of cooling the drive device such as PCU 133 to the minimum necessary level, and may increase the rotation speed of water pump 131 when ECU 500 controls each of five-way valves 180 and 190 such that the disconnection mode is set. In this way, cooling of battery 173 by the heat medium flowing through first closed circuit 11 is suppressed.

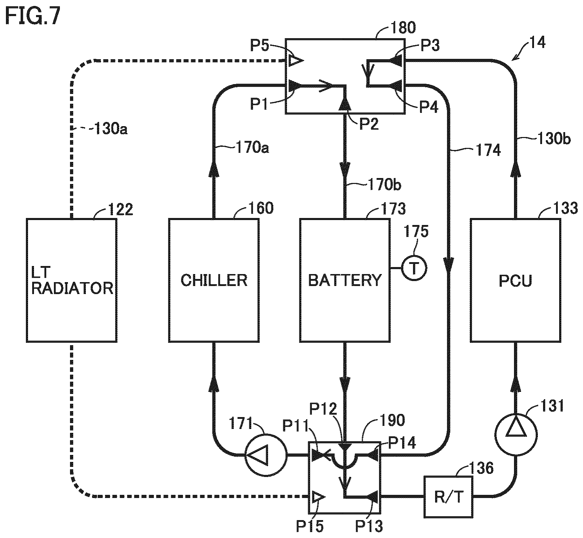

Further, for example, if it is determined as Yes in step S4 in the above-mentioned flowchart, when a heating request is issued after electrically powered vehicle 1a is driven, then, ECU 500 may control five-way valves 180 and 190 such that the radiator disconnection mode shown in Fig. 7 is set, and may drive compressor 151 in refrigeration cycle 150 and water pump 111 in high-temperature circuit 110. In the radiator disconnection mode, five-way valve 180 serves to form: a path through which ports P1 and P2 communicate with each other; and a path through which ports P3 and P4 communicate with each other, and also, five-way valve 190 serves to form: a path through which ports P11 and P14 communicate with each other; and a path through which ports P12 and P13 communicate with each other.

This results in formation of: third closed circuit 13 (see Fig. 7) in which flow path 170b corresponding to the "first flow path", flow path 130b corresponding to the "second flow path", bypass path 174, and flow path 170a corresponding to the "fourth flow path" are connected, and also, flow path 130a corresponding to the "third flow path" is disconnected from other flow paths.

In the radiator disconnection mode, the heat generated in battery 173 and the heat generated in PCU 133 or the transaxle are supplied to the refrigeration cycle through chiller 160, which therefore leads to reduction in power consumed by compressor 151 for generating the heat that is to be supplied from refrigeration cycle 150 to heater core 114 of high-temperature circuit 110 through condenser 140.

### [Second Embodiment]

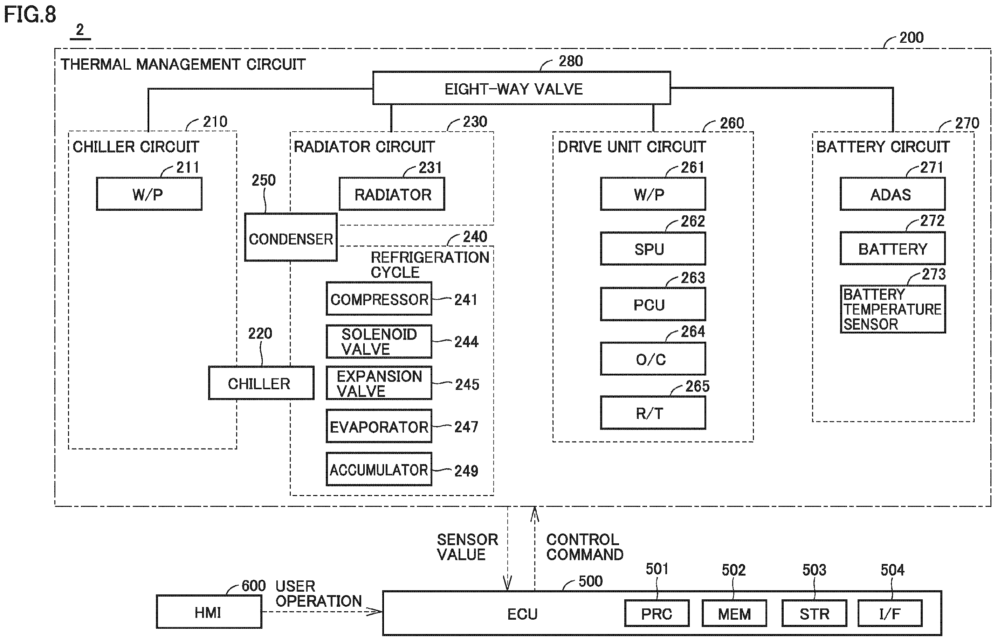

Next, a thermal management circuit 200 in the second embodiment of the present disclosure will be described with reference to Figs. 8 to 10. In the second embodiment, only portions different from those in the first embodiment will be described, but the descriptions of the same structures, functions, and effects as those in the first embodiment will not be repeated.

### <Overall Configuration>

Fig. 8 is a diagram showing a configuration of a thermal management system in the second embodiment of the present disclosure. A thermal management system 2 is different from thermal management system 1 (see Fig. 1) according to the first embodiment in that it includes thermal management circuit 200 in place of thermal management circuit 100.

### <Configuration of Thermal Management Circuit>

Thermal management circuit 200 includes, for example, a chiller circuit 210, a chiller 220, a radiator circuit 230, a refrigeration cycle 240, a condenser 250, a drive unit circuit 260, a battery circuit 270, and an eight-way valve 280. Eight-way valve 280 is an example of the "switching device" in the present disclosure.

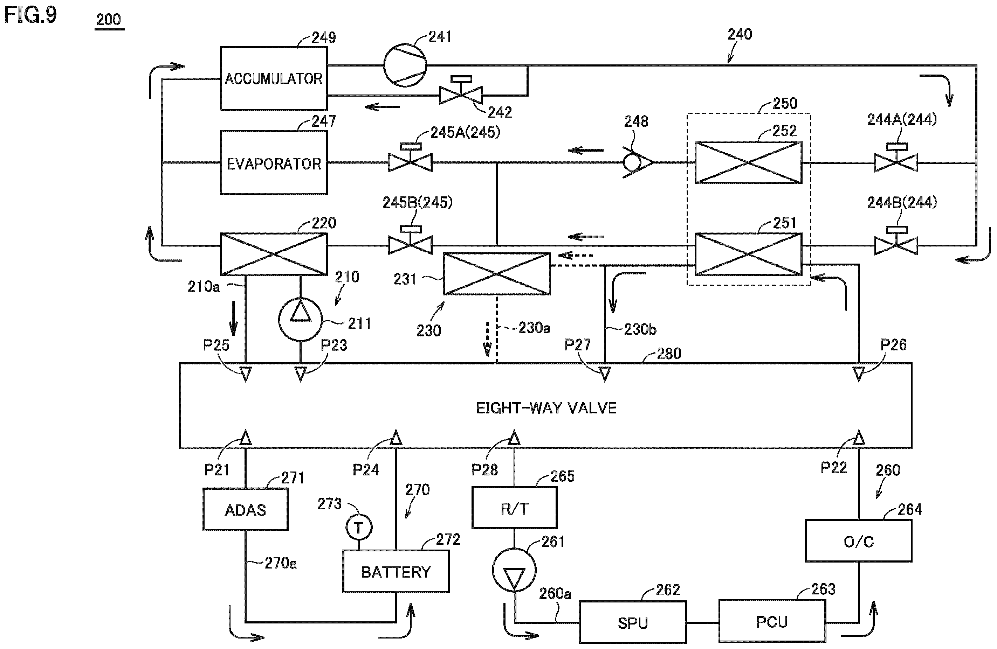

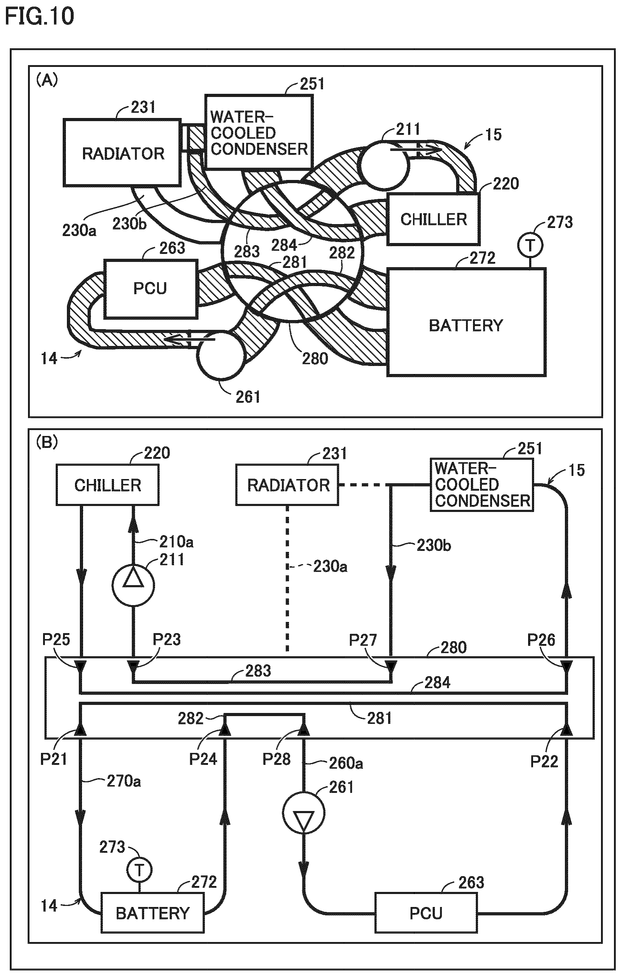

As shown in Fig. 9, eight-way valve 280 includes eight ports P21 to P28. As shown in Fig. 10, eight-way valve 280 has four internal flow paths 281 to 284.

Chiller circuit 210 includes a water pump (W/P) 211 and a flow path 210a that connects eight-way valve 280 (port P23), water pump 211, chiller 220, and eight-way valve 280 (port P25) in this order. Water pump 211 is an example of the "pump" in the present disclosure, and flow path 210a is an example of the "fourth flow path" in the present disclosure.

Chiller 220 is connected to (shared among) both chiller circuit 210 and refrigeration cycle 240. Chiller 220 exchanges heat between the heat medium circulating through chiller circuit 210 and the working medium circulating through refrigeration cycle 240.

Radiator circuit 230 includes: a radiator 231; a flow path 230a that connects eight-way valve 280 (port P26), a water-cooled condenser 251, radiator 231, and eight-way valve 280 in this order; and a bypass flow path 230b that connects eight-way valve 280 (port P27) to a portion of flow path 230a between water-cooled condenser 251 and radiator 231. Radiator 231 performs heat exchange between the heat medium flowing through radiator circuit 230 and the outside air of the vehicle. Bypass flow path 230b is a flow path for bypassing radiator 231. Flow path 230a is an example of the "third flow path" in the present disclosure.

Refrigeration cycle 240 includes, for example, a compressor 241, a solenoid valve 244 (244A and 244B), an expansion valve 245 (245A and 245B), an evaporator 247, and an accumulator 249.

As shown in Fig. 9, solenoid valve 244 includes a first solenoid valve 244A and a second solenoid valve 244B. Expansion valve 245 includes a first expansion valve 245A and a second expansion valve 245B. The opening degrees of solenoid valves 244A and 244B and expansion valves 245A and 245B can be adjusted.

As shown in Fig. 9, condenser 250 includes water-cooled condenser 251 and an air-cooled condenser 252. Water-cooled condenser 251 is connected to both refrigeration cycle 240 and radiator circuit 230. Water-cooled condenser 251 exchanges heat between the gas-phase working medium discharged from compressor 241 and the heat medium flowing through radiator circuit 230.

In the example shown in Fig. 9, refrigeration cycle 240 has a solenoid valve 242. Solenoid valve 242 is connected in parallel to compressor 241. According to the control command from ECU 500, solenoid valve 242 adjusts the flow rate of the working medium that is to be returned to accumulator 249 among the working media discharged from compressor 241.

The working medium in refrigeration cycle 240 flows through one of a first path, a second path, a third path, and a fourth path.

The first path passes through compressor 241, first solenoid valve 244A, air-cooled condenser 252, a check valve 248, first expansion valve (solenoid valve) 245A, evaporator 247, accumulator 249, and compressor 241 in this order.

The second path passes through compressor 241, first solenoid valve 244A, air-cooled condenser 252, check valve 248, second expansion valve (solenoid valve) 245B, chiller 220, accumulator 249, and compressor 241 in this order.

The third path passes through compressor 241, second solenoid valve 244B, water-cooled condenser 251, first expansion valve 245A, evaporator 247, accumulator 249, and compressor 241 in this order.

The fourth path passes through compressor 241, second solenoid valve 244B, water-cooled condenser 251, second expansion valve 245B, chiller 220, accumulator 249, and compressor 241 in this order.

Solenoid valves 244A, 244B and expansion valves 245A, 245B switch the first path, the second path, the third path, and the fourth path such that the working medium flows through one of the first path, the second path, the third path, and the fourth path.

Accumulator 249 serves to remove the liquid-phase working medium from the working medium in the gas-liquid mixed state, and prevents the liquid-phase working medium from flowing into compressor 241 when the liquid-phase working medium has not completely evaporated in evaporator 247.

Drive unit circuit 260 includes, for example: a water pump 261; an SPU 262; a PCU 263; an oil cooler 264; a reservoir tank 265; and a flow path 260a that connects eight-way valve 280 (port P28), reservoir tank 265, water pump 261, SPU 262, PCU 263, oil cooler 264, and eight-way valve 280 (port P22) in this order. Flow path 260a is an example of the "second flow path" in the present disclosure, and PCU 263 and oil cooler 264 are an example of the "drive device" in the present disclosure. The system including PCU 263, oil cooler 264, and a battery 272 is an example of the "traveling system" in the present disclosure.

Drive unit circuit 260 may include a transaxle in place of oil cooler 264. Further, in drive unit circuit 260, heat exchange may be performed between the heat generated by supplying electric power to a stator without rotating a rotor of the motor and the heat medium flowing through drive unit circuit 260.

Battery circuit 270 includes, for example: an advanced driver-assistance systems (ADAS) 271; battery 272; and a flow path 270a that connects eight-way valve 280 (port P21), ADAS 271, battery 272, eight-way valve 280 (port P24) in this order. Battery 272 is provided with a battery temperature sensor 273. Flow path 270a is an example of the "first flow path" in the present disclosure.

ADAS 271 includes, for example, an adaptive cruise control (ACC), an auto speed limiter (ASL), a lane keeping assist (LKA), a pre-crash safety (PCS), and a lane departure alert (LDA). Battery circuit 270 may include an autonomous driving system (ADS) in addition to ADAS 271.

### <Mode>

Fig. 10 is a conceptual diagram showing an outline of a prescribed mode (which may be hereinafter referred to as a warming mode) in thermal management circuit 200, the prescribed mode being implemented by controlling eight-way valve 280. Eight-way valve 280 is controlled to switch the state of connection between flow paths 210a, 230a, 230b, 260a, and 270a. Thereby, thermal management circuit 200 is switched to a plurality of modes including the warming mode.

In the present embodiment, when battery 272 is raised in temperature, ECU 500 controls eight-way valve 280 such that the warming mode shown in Fig. 10 is set. Specifically, in the warming mode, as shown in Fig. 10(B), internal flow path 281 of eight-way valve 280 allows communication between ports P21 and P22, and internal flow path 282 of eight-way valve 280 allows communication between ports P24 and P28. Further, internal flow path 283 of eight-way valve 280 allows communication between ports P23 and P27, and internal flow path 284 of eight-way valve 280 allows communication between ports P25 and P26.

This results in formation of: a fourth closed circuit 14 (see Figs. 10(A) and 10(B)) in which flow path 270a corresponding to the "first flow path" and flow path 260a corresponding to the "second flow path" are connected through eight-way valve 280; and a fifth closed circuit 15 (see Figs. 10(A) and 10(B)) in which bypass flow path 230b and flow path 210a corresponding to the "fourth flow path" are connected through eight-way valve 280, and also, flow path 230a corresponding to the "third flow path" is disconnected from other flow paths. In other words, radiator 231 is disconnected from other circuits (in an independent state).

Also in the present embodiment, during the temperature rise control for battery 272 in the warming mode, eight-way valve 280 may be controlled such that the radiator disconnection mode (not shown) is set when the temperature of battery 272 (the value detected by battery temperature sensor 273) becomes higher than set temperature Tc. However, in the present embodiment, thermal management circuit 200 cannot be switched by eight-way valve 280 to the disconnection mode (the mode in which flow path 270a provided with battery 272 is disconnected from other flow paths).

### <Method of Controlling Thermal Management Circuit>

Since the control details of thermal management system 2 in the present embodiment are substantially the same as those in the first embodiment, only differences from the control details in the first embodiment will be described below.

In other words, in the present embodiment, in step S3, ECU 500 controls eight-way valve 280 such that thermal management circuit 200 is set in the warming mode shown in Fig. 10, executes the temperature rise control for battery 272, and drives water pump 261 of fourth closed circuit 14. Further, in step S5, ECU 500 controls eight-way valve 280 such that thermal management circuit 200 is set in the radiator disconnection mode (not shown).

### [Third Embodiment]

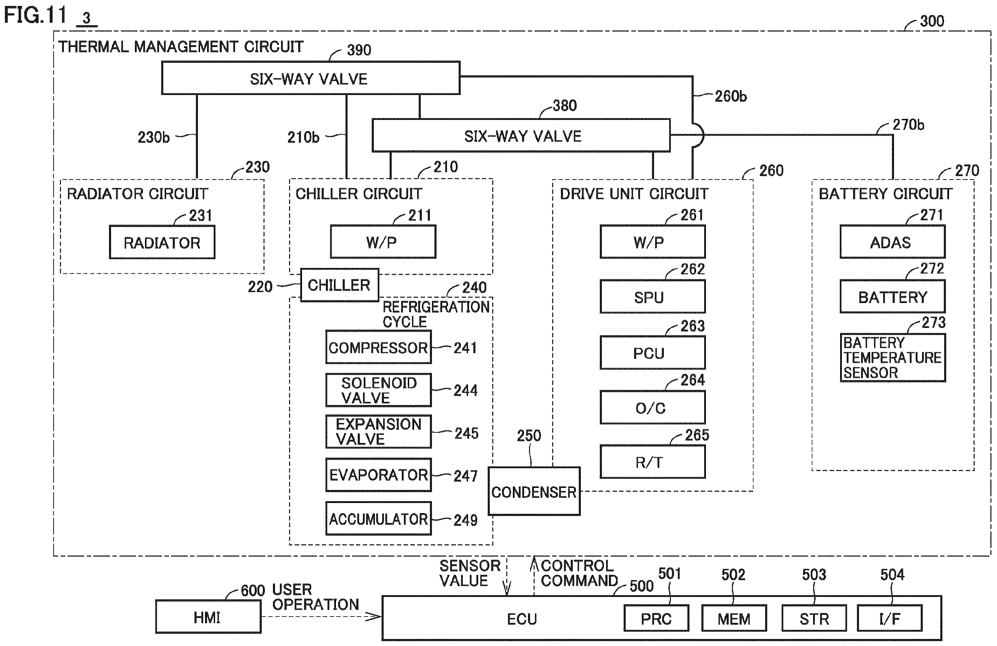

Next, a thermal management circuit 300 in the third embodiment of the present disclosure will be described with reference to Figs. 11 to 15. In the third embodiment, only portions different from those in the first embodiment will be described, but the descriptions of the same structures, functions, and effects as those in the first embodiment will not be repeated.

### <Overall Configuration>

Fig. 11 is a diagram showing a configuration of a thermal management system in the third embodiment of the present disclosure. A thermal management system 3 is different from thermal management system 1 (see Fig. 1) according to the first embodiment in that it includes thermal management circuit 300 in place of thermal management circuit 100.

### <Configuration of Thermal Management Circuit>

Thermal management circuit 300 includes, for example, chiller circuit 210, chiller 220, radiator circuit 230, refrigeration cycle 240, condenser 250, drive unit circuit 260, battery circuit 270, a six-way valve 380, and a six-way valve 390. Six-way valves 380 and 390 are an example of the "switching device" in the present disclosure.

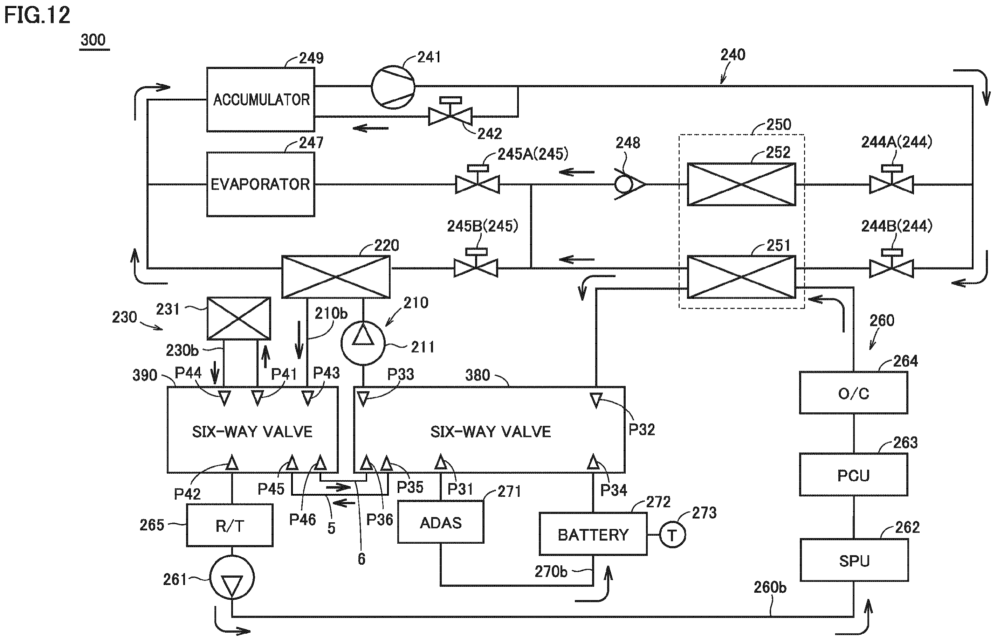

As shown in Fig. 12, six-way valve 380 includes six ports P31 to P36, and six-way valve 390 includes six ports P41 to P46. Six-way valve 380 is connected to six-way valve 390. Specifically, port P35 of six-way valve 380 and port P45 of six-way valve 390 are connected by a coupling flow path 5, and port P36 of six-way valve 380 and port P46 of six-way valve 390 are connected by a coupling flow path 6. Coupling flow paths 5 and 6 are an example of the "switching device" in the present disclosure.

Chiller circuit 210 includes water pump (W/P) 211 and a flow path 210b that connects six-way valve 380 (port P33), water pump 211, chiller 220, and six-way valve 390 (port P43) in this order. Water pump 211 is an example of the "pump" in the present disclosure, and flow path 210b is an example of the "fourth flow path" in the present disclosure.

Chiller 220 is connected to (shared between) both chiller circuit 210 and refrigeration cycle 240. Chiller 220 exchanges heat between the heat medium circulating through chiller circuit 210 and the working medium circulating through refrigeration cycle 240.

Radiator circuit 230 includes radiator 231 and flow path 230b that connects six-way valve 390 (port P41), radiator 231, and six-way valve 390 (port P44) in this order. Radiator 231 exchanges heat between the heat medium flowing through radiator circuit 230 and the outside air of the vehicle. Flow path 230b is an example of the "third flow path" in the present disclosure.

Refrigeration cycle 240 includes, for example, compressor 241, solenoid valve 244 (244A and 244B), expansion valve 245 (245A and 245B), evaporator 247, and accumulator 249.

As shown in Fig. 12, solenoid valve 244 includes first solenoid valve 244A and second solenoid valve 244B. Expansion valve 245 includes first expansion valve 245A and second expansion valve 245B. The opening degrees of solenoid valves 244A and 244B and expansion valves 245A and 245B can be adjusted.

As shown in Fig. 12, condenser 250 includes water-cooled condenser 251 and air-cooled condenser 252. Water-cooled condenser 251 is connected to both refrigeration cycle 240 and drive unit circuit 260. Water-cooled condenser 251 exchanges heat between the gas-phase working medium discharged from compressor 241 and the heat medium flowing through drive unit circuit 260.

In the example shown in Fig. 12, refrigeration cycle 240 has solenoid valve 242. Solenoid valve 242 is connected in parallel to compressor 241. According to the control command from ECU 500, solenoid valve 242 adjusts the flow rate of the working medium that is to be returned to accumulator 249 among the working media discharged from compressor 241.

The working medium in refrigeration cycle 240 flows through one of a first path, a second path, a third path, and a fourth path.

The first path passes through compressor 241, first solenoid valve 244A, air-cooled condenser 252, check valve 248, first expansion valve (solenoid valve) 245A, evaporator 247, accumulator 249, and compressor 241 in this order.

The second path passes through compressor 241, first solenoid valve 244A, air-cooled condenser 252, check valve 248, second expansion valve (solenoid valve) 245B, chiller 220, accumulator 249, and compressor 241 in this order.

The third path passes through compressor 241, second solenoid valve 244B, water-cooled condenser 251, first expansion valve 245A, evaporator 247, accumulator 249, and compressor 241 in this order.

The fourth path passes through compressor 241, second solenoid valve 244B, water-cooled condenser 251, second expansion valve 245B, chiller 220, accumulator 249, and compressor 241 in this order.

Solenoid valves 244A, 244B and expansion valves 245A, 245B switch the first path, the second path, the third path, and the fourth path such that the working medium flows through one of the first path, the second path, the third path, and the fourth path.

Accumulator 249 serves to remove the liquid-phase working medium from the working medium in the gas-liquid mixed state, and prevents the liquid-phase working medium from flowing into compressor 241 when the liquid-phase working medium has not completely evaporated in evaporator 247.

Drive unit circuit 260 includes, for example: water pump 261; SPU 262; PCU 263; oil cooler 264; reservoir tank 265; and a flow path 260b that connects six-way valve 390 (port P42), reservoir tank 265, water pump 261, SPU 262, PCU 263, oil cooler 264, water-cooled condenser 251, and six-way valve 380 (port P32) in this order. A heat medium temperature sensor 274 is provided in flow path 260b. Flow path 260b is an example of the "second flow path" in the present disclosure, and PCU 263 and oil cooler 264 are an example of the "drive device" in the present disclosure. The system including PCU 263, oil cooler 264, and battery 272 is an example of the "traveling system" in the present disclosure.

Drive unit circuit 260 may include a transaxle in place of oil cooler 264. Further, in drive unit circuit 260, heat may be exchanged between the heat generated by supplying electric power to a stator without rotating a rotor of the motor and the heat medium flowing through drive unit circuit 260.

Battery circuit 270 includes, for example: an advanced driver-assistance systems (ADAS) 271; battery 272; and a flow path 270b that connects six-way valve 380 (port P31), ADAS 271, battery 272, and six-way valve 380 (port P34) in this order. Battery 272 is provided with a battery temperature sensor 273. Flow path 270b is an example of the "first flow path" in the present disclosure.

ADAS 271 includes, for example, an adaptive cruise control (ACC), an auto speed limiter (ASL), a lane keeping assist (LKA), a pre-crash safety (PCS), and a lane departure alert (LDA). Battery circuit 270 may include an autonomous driving system (ADS) in addition to ADAS 271.

### <Mode>

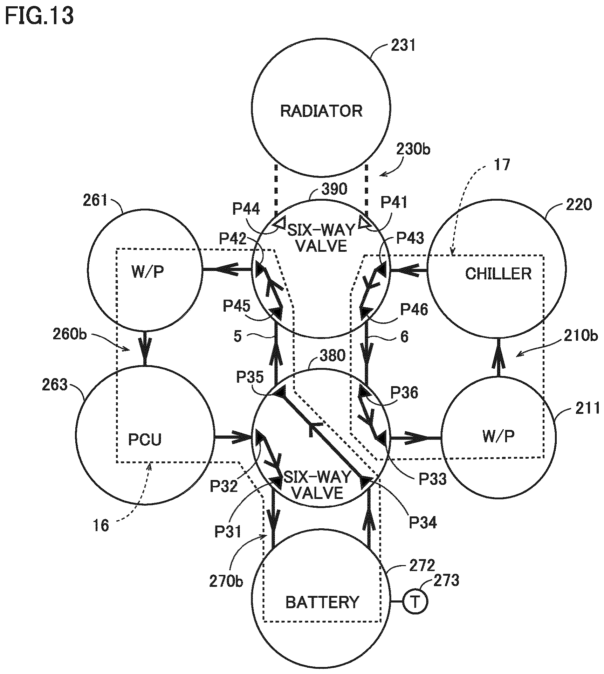

Fig. 13 is a conceptual diagram showing an outline of a prescribed mode (which may be hereinafter referred to as a warming mode) in thermal management circuit 300, the prescribed mode being implemented by controlling six-way valves 380 and 390. Six-way valves 380 and 390 are controlled to switch the state of connection between flow paths 210b, 230b, 260b, and 270b. Thereby, thermal management circuit 300 is switched to a plurality of modes including the warming mode.

In the present embodiment, when battery 272 is raised in temperature, ECU 500 controls six-way valves 380 and 390 such that the warming mode shown in Fig. 13 is set. Specifically, in the warming mode, six-way valve 380 serves to form: a path through which ports P31 and P32 communicate with each other; a path through which ports P33 and P36 communicate with each other; and a path through which ports P34 and P35 communicate with each other, and also, six-way valve 390 serves to form: a path through which ports P42 and P45 communicate with each other; and a path through which ports P43 and P46 communicate with each other.

This results in formation of: a sixth closed circuit 16 (see Fig. 13) in which flow path 270b corresponding to the "first flow path", flow path 260b corresponding to the "second flow path", and coupling flow path 5 are connected; and a seventh closed circuit 17 (see Fig. 13) in which flow path 210b corresponding to the "fourth flow path" and coupling flow path 6 are connected, and also, flow path 230b corresponding to the "third flow path" is disconnected from other flow paths. In other words, radiator 231 is disconnected from other circuits (in an independent state).

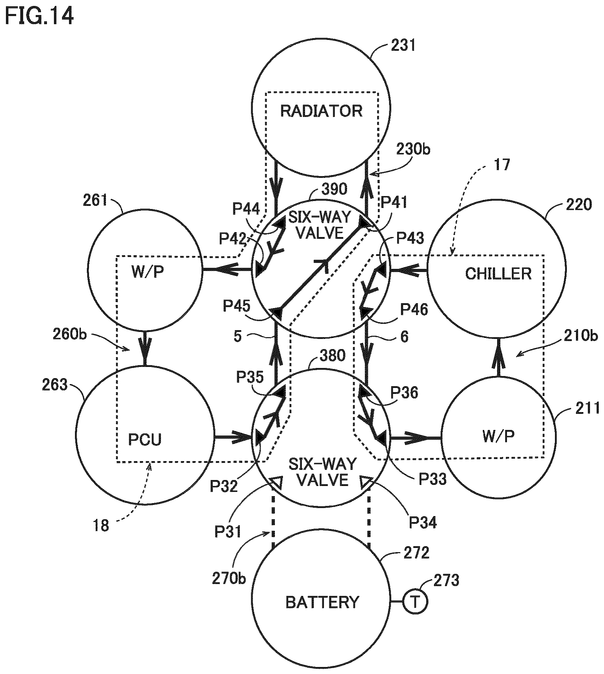

Further, during the temperature rise control for battery 272 in the warming mode, ECU 500 controls six-way valves 380 and 390 such that the disconnection mode shown in Fig. 14 is set when the temperature of battery 272 (the value detected by battery temperature sensor 273) becomes higher than set temperature Tc. Specifically, in the disconnection mode, six-way valve 380 serves to form: a path through which ports P32 and P35 communicate with each other; and a path through which ports P33 and P36 communicate with each other, and also, six-way valve 390 serves to form: a path through which ports P41 and P45 communicate with each other; a path through which ports P42 and P44 communicate with each other; and a path through which ports P43 and P46 communicate with each other.

This results in formation of: seventh closed circuit 17; and an eighth closed circuit 18 (see Fig. 14) in which flow path 260b corresponding to the "second flow path", coupling flow path 5, and flow path 230b corresponding to the "third flow path" are connected, and also, flow path 270b corresponding to the "first flow path" is disconnected from other flow paths.

### <Method of Controlling Thermal Management Circuit>

Since the control details of thermal management system 3 in the present embodiment are substantially the same as those in the first embodiment, only differences from the control details in the first embodiment will be described below.

In other words, in the present embodiment, in step S3, ECU 500 controls each of six-way valves 380 and 390 such that thermal management circuit 300 is set in the warming mode shown in Fig. 13, executes the temperature rise control for battery 272, and drives water pump 261 of sixth closed circuit 16. Further, in step S5, ECU 500 controls each of six-way valves 380 and 390 such that thermal management circuit 300 is set in the disconnection mode shown in Fig. 14.

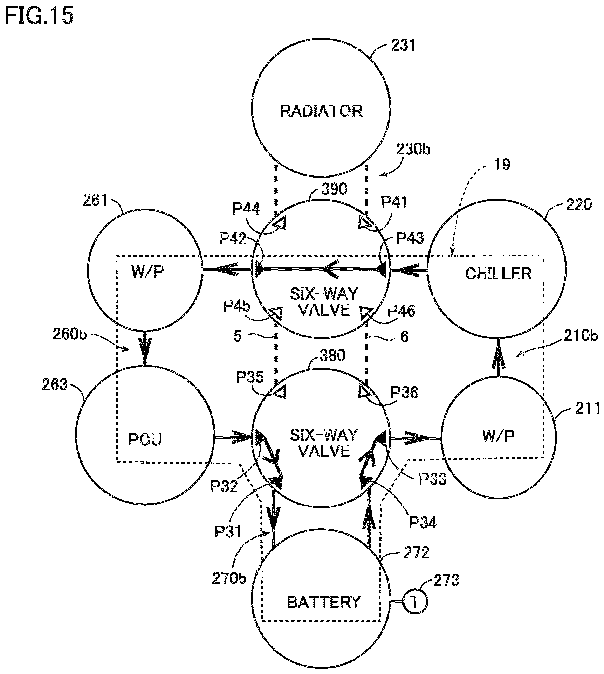

Further, for example, if it is determined as Yes in step S4 in the above-mentioned flowchart, when a heating request is issued after electrically powered vehicle 1a is driven, then, ECU 500 may control six-way valves 380 and 390 such that the radiator disconnection mode shown in Fig. 15 is set, and may drive compressor 151 in refrigeration cycle 150 and water pump 111 in high-temperature circuit 110. In the radiator disconnection mode, six-way valve 380 serves to form: a path through which ports P31 and P32 communicate with each other; and a path through which ports P33 and P34 communicate with each other, and also, six-way valve 390 serves to form a path through which ports P42 and P43 communicate with each other.

This results in formation of a ninth closed circuit 19 (see Fig. 15) in which flow path 270b corresponding to the "first flow path", flow path 260b corresponding to the "second flow path", and flow path 210b corresponding to the "fourth flow path" are connected. Also, flow path 230b corresponding to the "third flow path" is disconnected from other flow paths.

### [Fourth Embodiment]

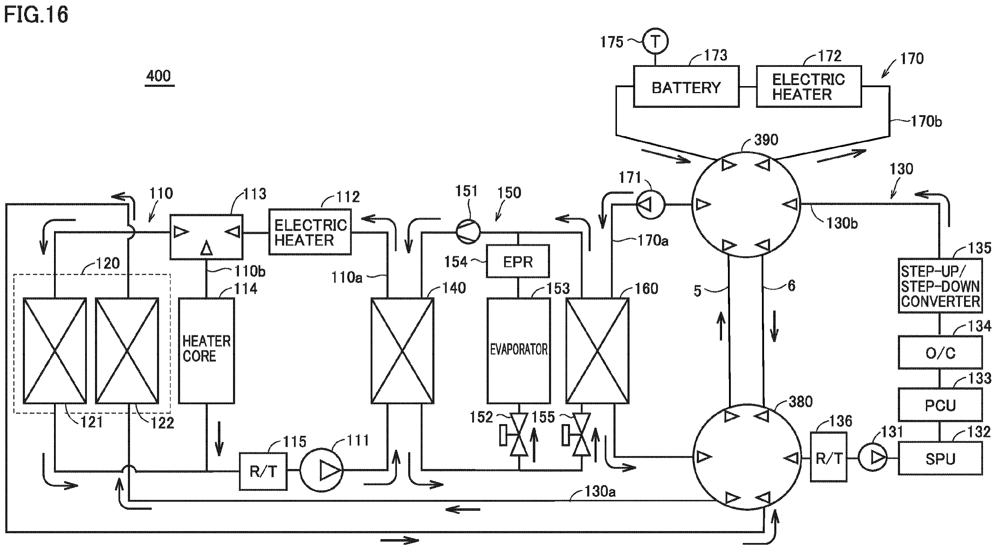

Next, a thermal management circuit 400 in the fourth embodiment of the present disclosure will be described with reference to Fig. 16. In the fourth embodiment, only portions different from those in the first embodiment will be described, but the descriptions of the same structures, functions, and effects as those in the first embodiment will not be repeated.

### <Overall Configuration>

A thermal management system (not shown) in the present embodiment is different from thermal management system 1 (see Fig. 1) according to the first embodiment in that it includes thermal management circuit 400 in place of thermal management circuit 100.

Thermal management circuit 400 is different from thermal management circuit 100 in that it includes six-way valves 380 and 390 in place of five-way valves 180 and 190. In other words, thermal management circuit 400 corresponds to thermal management circuit 200 in the second embodiment to which high-temperature circuit 110 in the first embodiment is added. Six-way valves 380 and 390 are an example of the "switching device" in the present disclosure.

The mode implemented in thermal management circuit 400 by switching six-way valves 380 and 390 is the same as the mode described in the third embodiment.

The first embodiment has been described with regard to an example in which thermal management circuit 100 includes high-temperature circuit 110, but high-temperature circuit 110 may not be provided in thermal management circuit 100.

Each of the above embodiments has been described with regard to an example in which the temperature rise control for the battery is performed at the time when driving of electrically powered vehicle 1a is started (at the time when the traveling system is activated), but the timing to start the temperature rise control is not limited thereto. For example, the temperature rise control may be executed when the temperature of the battery becomes less than a prescribed threshold value (for example, 10°C). In this case, the ECU may acquire the detected value of the temperature of the battery for each prescribed period (for example, one hour).

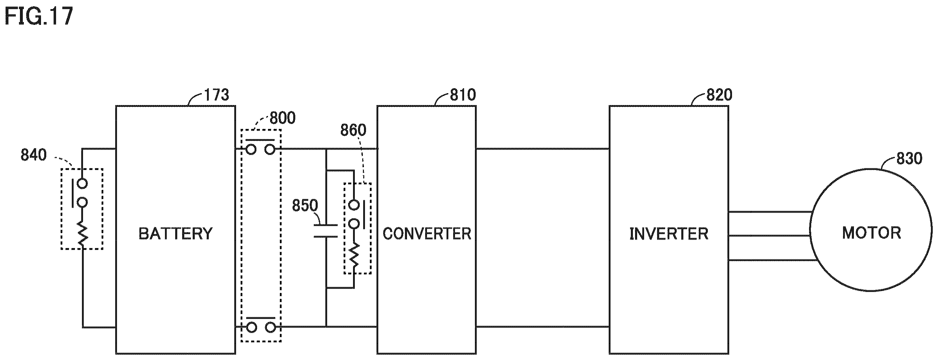

Referring to Fig. 17, the following describes the temperature rise control as an example of the means for raising the temperature of battery 173. Battery 173 is connected to a converter 810 through a system main relay (SMR) 800. Converter 810 is connected to an inverter 820. Inverter 820 is connected to a motor 830. A discharge circuit 840 including a switch and a resistive element is connected to battery 173. A smoothing capacitor 850 is provided between battery 173 and converter 810. A discharge circuit 860 constituted of a switch and a resistive element is connected in parallel to smoothing capacitor 850. Note that Fig. 17 is shown representatively based on the configuration of the first embodiment, but the similar configuration may be applied also in each of other embodiments.

The temperature rise control for battery 173 may include, for example, control to electrically disconnect SMR 800 and to turn on the switch of discharge circuit 840. Thereby, the current flows through a closed circuit formed by battery 173 and discharge circuit 840. The temperature rise control for battery 173 may include control to turn off the switch of discharge circuit 840 and to turn on the switches of SMR 800 and discharge circuit 860. Thereby, the current flows through a closed circuit formed by battery 173, SMR 800, and discharge circuit 860. Further, the temperature rise control for battery 173 may include control to cause a current, which has been adjusted not to generate torque in motor 830, to flow in the state in which SMR 800 is turned on and the switches of discharge circuits 840 and 860 are turned off.

The temperature rise control is an example of the means for raising the temperature of battery 173 when the temperature of battery 173 is lower than reference temperature Tb. In each of the embodiments, the timing for ECU 500 to control the switching devices (five-way valves 180 and 190, eight-way valve 280, and six-way valves 380 and 390) to implement the temperature rise mode is not limited to the timing of the above-mentioned temperature rise control.

Further, switching by the switching device is executed not only by ECU 500 (the controller) mounted on electrically powered vehicle 1a. The switching device may form a circuit in the temperature rise mode based on the signal and the like received from the outside of electrically powered vehicle 1a.

### [Fifth Embodiment]

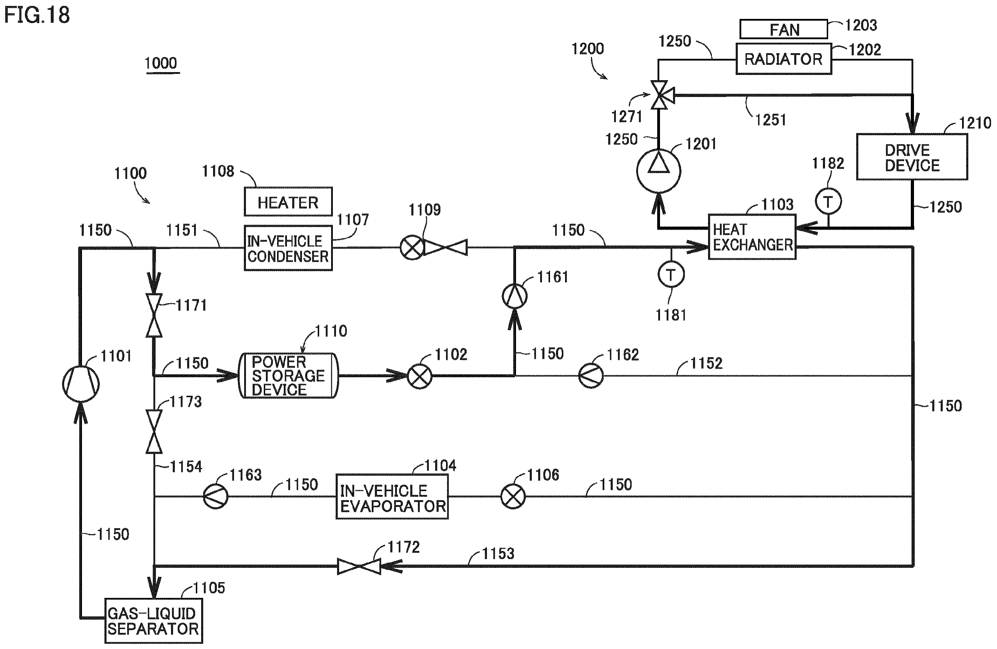

The following describes a thermal management circuit 1000 in the fifth embodiment of the present disclosure with reference to Fig. 18. In the fifth embodiment, only portions different from those in the first embodiment will be described, but the descriptions of the same structures, functions, and effects as those in the first embodiment will not be repeated.

### <Overall Configuration>

The thermal management system (not shown) in the present embodiment is different from thermal management system 1 (see Fig. 1) according to the first embodiment in that it includes thermal management circuit 1000 in place of thermal management circuit 100.

Thermal management circuit 1000 includes: a first thermal management system 1100 including a working medium (water, a medium lower in boiling point than water, or the like); and a second thermal management system 1200 including a heat medium (water or the like).

First thermal management system 1100 includes a compressor 1101, an expansion valve 1102, a heat exchanger 1103, an in-vehicle evaporator 1104, a gas-liquid separator 1105, an electronic expansion valve 1106, an in-vehicle condenser 1107, a heater 1108, an expansion opening/closing valve 1109, a power storage device 1110, a first circulation flow path 1150, a power storage device bypass flow path 1151, a heat exchanger bypass flow path 1152, and an in-vehicle evaporator bypass flow path 1153.

### Compressor 1101 compresses a working medium.

Expansion valve 1102 expands the working medium discharged from compressor 1101. Expansion valve 1102 is configured to expand the working medium bidirectionally.

Heat exchanger 1103 exchanges heat between the working medium having flowed out of expansion valve 1102 and the heat medium in second thermal management system 1200.

In-vehicle evaporator 1104 exchanges heat between the working medium having flowed out of heat exchanger 1103 and the air inside the vehicle (inside the compartment of the vehicle).

Gas-liquid separator 1105 separates the working medium having flowed into gas-liquid separator 1105 into a gas-phase working medium and a liquid-phase working medium.

First circulation flow path 1150 is a flow path through which the working medium circulates. First circulation flow path 1150 connects compressor 1101, expansion valve 1102, and heat exchanger 1103 in this order. In-vehicle evaporator 1104 is provided in a portion on the downstream side of heat exchanger 1103 in first circulation flow path 1150. Gas-liquid separator 1105 is provided in a portion between in-vehicle evaporator 1104 and compressor 1101 in first circulation flow path 1150.

Power storage device (battery) 1110 is connected to first circulation flow path 1150 so as to exchange heat with the working medium flowing through a portion between compressor 1101 and expansion valve 1102 in first circulation flow path 1150. In other words, power storage device 1110 is in thermal contact with a portion between compressor 1101 and expansion valve 1102 in first circulation flow path 1150.

Electronic expansion valve 1106 expands the working medium. Electronic expansion valve 1106 is provided in a portion between heat exchanger 1103 and in-vehicle evaporator 1104 in first circulation flow path 1150.

Power storage device bypass flow path 1151 is connected to first circulation flow path 1150 so as to bypass power storage device 1110.

In-vehicle condenser (chiller) 1107 is provided in power storage device bypass flow path 1151. In-vehicle condenser 1107 exchanges heat between the working medium discharged from compressor 1101 and the air inside the vehicle.

### Heater 1108 heats the air to be supplied to the inside of the vehicle.

Expansion opening/closing valve 1109 has a function as an expansion valve and a function as an opening/closing valve. Expansion opening/closing valve 1109 is provided in a portion on the downstream side of in-vehicle condenser 1107 in power storage device bypass flow path 1151. Expansion opening/closing valve 1109 expands the working medium having flowed out of in-vehicle condenser 1107.

Heat exchanger bypass flow path 1152 is connected to first circulation flow path 1150 so as to bypass heat exchanger 1103.

A first check valve 1161 is provided in a portion of first circulation flow path 1150, the portion being in parallel to heat exchanger bypass flow path 1152 and being on the upstream side of heat exchanger 1103. As indicated by arrows in Fig. 18, first check valve 1161 only allows the working medium to flow toward heat exchanger 1103.

A second check valve 1162 is provided in heat exchanger bypass flow path 1152. Second check valve 1162 only allows the working medium having flowed out of heat exchanger 1103 to flow toward power storage device 1110 through heat exchanger bypass flow path 1152.

In-vehicle evaporator bypass flow path 1153 is connected to first circulation flow path 1150 so as to bypass in-vehicle evaporator 1104.

A third check valve 1163 is provided in a portion of first circulation flow path 1150, the portion being in parallel to in-vehicle evaporator bypass flow path 1153 and being on the downstream side of in-vehicle evaporator 1104. Third check valve 1163 only allows the working medium to flow toward gas-liquid separator 1105.

A first opening/closing valve 1171 is provided in a portion of first circulation flow path 1150, the portion being in parallel to power storage device bypass flow path 1151 and being on the upstream side of power storage device 1110.

A second opening/closing valve 1172 is provided in the in-vehicle evaporator bypass flow path 1153.

In the present embodiment, a first coupling flow path 1154 is connected to first circulation flow path 1150. First coupling flow path 1154 couples a portion between first opening/closing valve 1171 and power storage device 1110 in first circulation flow path 1150 to a portion between third check valve 1163 and gas-liquid separator 1105 in first circulation flow path 1150. A third opening/closing valve 1173 is provided in first coupling flow path 1154.

Second thermal management system 1200 includes a pump 1201, a radiator 1202, a fan 1203, a drive device 1210, a second circulation flow path 1250, and a radiator bypass flow path 1251.

Pump 1021 pressurizes the liquid-phase heat medium having flowed out of heat exchanger 1103.

Radiator 1202 cools the heat medium having been discharged from pump 1201.

Fan 1203 is installed to face radiator 1202. Fan 1203 supplies cold air to radiator 1202. This promotes heat dissipation in radiator 1202.

Second circulation flow path 1250 is a flow path through which the heat medium circulates. Second circulation flow path 1250 connects heat exchanger 1103, pump 1201, and radiator 1202 in this order. Heat exchanger 1103 is connected to first circulation flow path 1150 and second circulation flow path 1250.

Drive device 1210 supplies drive power to electrical equipment (electrically powered vehicle 1a). Drive device 1210 includes devices operating at high voltages, such as a motor, a motor controller, charging power distribution triple-in-one, and the like. These devices generate a large amount of heat while they are operating. Drive device 1210 is connected to second circulation flow path 1250 so as to exchange heat with the heat medium flowing through a portion between radiator 1202 and heat exchanger 1103 in second circulation flow path 1250. In other words, drive device 1210 is in thermal contact with the portion between radiator 1202 and heat exchanger 1103 in second circulation flow path 1250.

Radiator bypass flow path 1251 is connected to second circulation flow path 1250 so as to bypass radiator 1202.

A three-way valve 1271 is provided at a portion of connection between second circulation flow path 1250 and the upstream-side end of radiator bypass flow path 1251. Three-way valve 1271 can switch the flowing state of the heat medium between the state in which the heat medium flows through second circulation flow path 1250 and the state in which the heat medium flows through radiator bypass flow path 1251. Three-way valve 1271 may be configured to be capable of switching the flowing state of the heat medium to the state in which the heat medium flows through at least one of second circulation flow path 1250 and radiator bypass flow path 1251.

First thermal management system 1100 and second thermal management system 1200 each include a switching device capable of: switching the flow path through which the working medium flows; and switching the flow path through which the heat medium flows. In the present embodiment, first opening/closing valve 1171, second opening/closing valve 1172, third opening/closing valve 1173, expansion opening/closing valve 1109, and three-way valve 1271 constitute a switching device. The switching device is capable of switching the mode of thermal management circuit 1000 to: a warming mode (a mode shown in Fig. 18) to warm power storage device 1110; a cooling mode (not shown) to cool power storage device 1110; an in-vehicle cooling mode (not shown); an in-vehicle heating mode (not shown); or a mode obtained by combining these modes.

When power storage device 1110 is raised in temperature, ECU 500 controls the switching device such that the warming mode shown in Fig. 18 is set. In the warming mode, first opening/closing valve 1171 and second opening/closing valve 1172 are opened while third opening/closing valve 1173 and expansion opening/closing valve 1109 are closed. Thus, as indicated by the arrows in Fig. 18, the working medium discharged from compressor 1101 exchanges heat with power storage device 1110 to thereby warm power storage device 1110. Then, the working medium having passed through power storage device 1110 expands in expansion valve 1102 to turn into a low-temperature liquid. The working medium exchanges heat, in heat exchanger 1103, with the heat medium in second thermal management system 1200. Specifically, the working medium receives heat from the heat medium in heat exchanger 1103. The working medium having flowed out of heat exchanger 1103 flows into gas-liquid separator 1105 through in-vehicle evaporator bypass flow path 1153, and then flows into compressor 1101 again.

In the warming mode, three-way valve 1271 allows the heat medium to pass through radiator bypass flow path 1251. Thus, the heat received by the heat medium from drive device 1210 is given to the working medium in heat exchanger 1103 but is not released in radiator 1202.

As described above, when power storage device 1110 is raised in temperature, the switching device disconnects power storage device bypass flow path 1151 from first circulation flow path 1150, and disconnects radiator 1202 from second circulation flow path 1250.

ECU 500 preferably drives compressor 1101 upon satisfaction of a heat receiving condition on which the working medium receives heat from the heat medium in heat exchanger 1103. In other words, compressor 1101 preferably operates upon satisfaction of the heat receiving condition on which the working medium receives heat from the heat medium in heat exchanger 1103.

For example, the heat receiving condition may be set as a condition that the temperature of the heat medium flowing into heat exchanger 1103 is equal to or higher than the temperature of the working medium flowing into heat exchanger 1103. The temperature of the heat medium flowing into heat exchanger 1103 is detected, for example, by a temperature sensor 1181 provided at an inlet portion of heat exchanger 1103 in first circulation flow path 1150. The temperature of the working medium flowing into heat exchanger 1103 is detected, for example, by a temperature sensor 1182 provided at an inlet portion of heat exchanger 1103 in second circulation flow path 1250.

Alternatively, the heat receiving condition may be set as a condition that a prescribed time period has elapsed since activation of at least one of pump 1201 and drive device 1210. In other words, compressor 1101 may be driven with a delay from the activation of at least one of pump 1201 and drive device 1210. In this case, the above-mentioned prescribed time period may be set as a time period during which the temperature of the heat medium flowing into heat exchanger 1103 becomes approximately equal to the temperature of the working medium flowing into heat exchanger 1103.

As described above, in the present embodiment, during the self-heating of power storage device 1110, power storage device bypass flow path 1151 is disconnected from first circulation flow path 1150, and radiator 1202 is disconnected from second circulation flow path 1250. Thus, the heat of the working medium discharged from compressor 1101 is effectively supplied to power storage device 1110, and the heat generated in drive device 1210 is effectively supplied to power storage device 1110 via the heat medium, heat exchanger 1103, and the working medium. This makes it possible to achieve both effective use of the heat generated from drive device 1210 and efficient self-heating of power storage device 1110.

### [Sixth Embodiment]

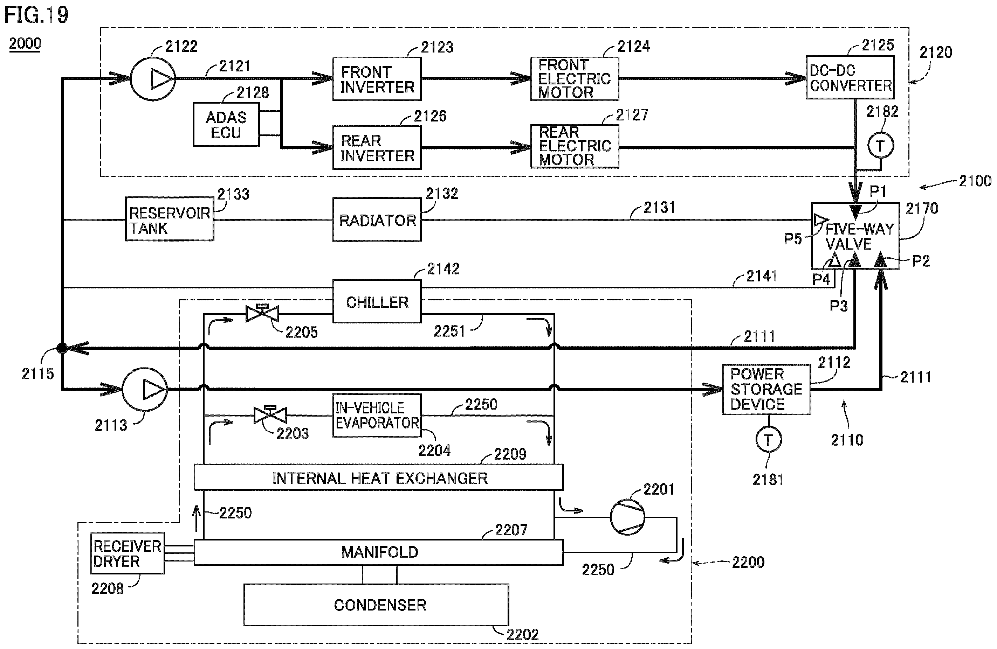

The following describes a thermal management circuit 2000 in the sixth embodiment of the present disclosure with reference to Fig. 19. In the sixth embodiment, only portions different from those in the first embodiment will be described, but the descriptions of the same structures, functions, and effects as those in the first embodiment will not be repeated.

### <Overall Configuration>

The thermal management system (not shown) in the present embodiment is different from thermal management system 1 (see Fig. 1) according to the first embodiment in that it includes thermal management circuit 2000 in place of thermal management circuit 100.

Thermal management circuit 2000 includes a heat medium circuit 2100 including a heat medium (water or the like) and a refrigeration circuit 2200 including a working medium (water, a medium lower in boiling point than water, or the like).
The following first describes refrigeration circuit 2200.

Refrigeration circuit 2200 includes a compressor 2201, a condenser 2202, a first expansion valve 2203, an in-vehicle evaporator 2204, a second expansion valve 2205, a chiller 2206, a circulation flow path 2250, and an in-vehicle evaporator bypass flow path 2251.

Compressor 2201 compresses a working medium. Condenser 2202 condenses the working medium discharged from the compressor. First expansion valve 2203 expands the working medium having flowed out of condenser 2202. In-vehicle evaporator 2204 exchanges heat between the working medium having flowed out of first expansion valve 2203 and the air inside the vehicle (inside the compartment of the vehicle).

Circulation flow path 2250 is a flow path through which the working medium circulates. Circulation flow path 2250 connects compressor 2201, condenser 2202, first expansion valve 2203, and in-vehicle evaporator 2204 in this order.

In-vehicle evaporator bypass flow path 2251 is connected to circulation flow path 2250 so as to bypass in-vehicle evaporator 2204. Second expansion valve 2205 is provided in the in-vehicle evaporator bypass flow path 2251.

Refrigeration circuit 2200 further includes a manifold 2207, a receiver dryer 2208, and an internal heat exchanger 2209.

Manifold 2207 is provided in circulation flow path 2250. Receiver dryer 2208 is connected to manifold 2207. Internal heat exchanger 2209 is connected to: a portion on the upstream side of first expansion valve 2203 in circulation flow path 2250; and a portion on the downstream side of in-vehicle evaporator 2204 in circulation flow path 2250.

The following describes heat medium circuit 2100. Heat medium circuit 2100 includes a first circuit 2110, a second circuit 2120, a third flow path 2131, a radiator 2132, a reservoir tank 2133, a fourth flow path 2141, a chiller 2142, and a switching device 2170.

First circuit 2110 includes a first flow path 2111, a power storage device (battery) 2112, and a first pump 2113.

First flow path 2111 is a flow path through which the heat medium flows. Power storage device 2112 is connected to first flow path 2111 to exchange heat with the heat medium flowing through first flow path 2111. In other words, power storage device 2112 is in thermal contact with first flow path 2111. First pump 2113 is provided in first flow path 2111.

Second circuit 2120 includes a second flow path 2121, a second pump 2122, and a drive device. Second flow path 2121 is a flow path through which the heat medium flows. Second pump 2122 is provided in second flow path 2121.

The drive device supplies drive power to electrical equipment (electrically powered vehicle 1a). The drive device is connected to second flow path 2121 to exchange heat with the heat medium flowing through second flow path 2121. In other words, the drive device is in thermal contact with second flow path 2121. The drive device is connected to a portion on the downstream side of second pump 2122 in second flow path 2121. In the present embodiment, the drive device includes a front inverter 2123, a front electric motor 2124, a DC-DC converter 2125, a rear inverter 2126, and a rear electric motor 2127. An ADAS (advanced driver assistance system)-ECU (electronic control unit) 2128 is connected to second flow path 2121.

Third flow path 2131 is a flow path through which the heat medium flows. Radiator 2132 and reservoir tank 2133 are provided in third flow path 2131.

Fourth flow path 2141 is a flow path through which the heat medium flows. Chiller 2142 is connected to fourth flow path 2141 and in-vehicle evaporator bypass flow path 2251. Chiller 2142 causes the heat medium flowing through fourth flow path 2141 to exchange heat with the working medium flowing through in-vehicle evaporator bypass flow path 2251.

Switching device 2170 is capable of switching the state of connection between flow paths 2111, 2121, 2131, and 2141. In the present embodiment, switching device 2170 is formed of a five-way valve.

As shown in Fig. 19, one end portion of first flow path 2111 is connected to first port P3 of switching device 2170, and the other end portion of first flow path 2111 is connected to second port P2 of switching device 2170.

One end portion of second flow path 2121 is connected to a branch portion 2115 in first flow path 2111, and the other end portion of second flow path 2121 is connected to first port P1 of switching device 2170. In other words, first flow path 2111 and second flow path 2121 are connected to switching device 2170 to be parallel to each other.

One end portion of third flow path 2131 is connected to fifth port P5 of switching device 2170, and the other end portion of third flow path 2131 is connected to a portion between second pump 2122 and branch portion 2115 in second flow path 2121.

One end portion of fourth flow path 2141 is connected to fourth port P4 of switching device 2170, and the other end portion of fourth flow path 2141 is connected to a portion between second pump 2122 and branch portion 2115 in second flow path 2121.

Switching device 2170 is capable of switching the mode of thermal management circuit 2200 to: a warming mode (a mode shown in Fig. 19) to warm power storage device 2112; a cooling mode (not shown) to cool power storage device 2112; an in-vehicle cooling mode (not shown); an in-vehicle heating mode (not shown); or a mode obtained by combining these modes.

When power storage device 2112 is raised in temperature, ECU 500 controls switching device 2170 such that the warming mode shown in Fig. 19 is set. In the warming mode, first port P1, second port P2, and third port P3 are opened while fourth port P4 and fifth port P5 are closed. Then, first pump 2113 and second pump 2122 are driven.

Thus, as indicated by arrows in Fig. 19, the heat medium having flowed out of third port P3 of switching device 2170 into first flow path 2111 is branched at branch portion 2115, and then flows toward first pump 2113 and second pump 2122. The heat medium pressurized by first pump 2113 exchanges heat with power storage device 2112 to warm power storage device 2112, and then flows into second port P2 of switching device 2170. The heat medium pressurized by second pump 2122 exchanges heat with the drive device to absorb heat from the drive device, and then flows into first port P1 of switching device 2170. On the other hand, in the warming mode, fourth port P4 and fifth port P5 are closed, and thus, the heat medium does not flow through third flow path 2131 and fourth flow path 2141.

As described above, when power storage device 2112 is raised in temperature, switching device 2170 forms: first circuit 2110 in which the heat medium circulates through first flow path 2111 and switching device 2170; and second circuit 2120 in which the heat medium circulates through second flow path 2121 and switching device 2170, and also disconnects each of third flow path 2131 and fourth flow path 2141 from first circuit 2110 and second circuit 2120.

ECU 500 preferably drives second pump 2122 upon satisfaction of the heat receiving condition on which power storage device 2112 receives heat from the heat medium. In other words, second pump 2122 is preferably activated upon satisfaction of the heat receiving condition on which power storage device 2112 receives heat from the heat medium.

For example, the heat receiving condition may be set as a condition that the temperature of the heat medium flowing through the portion on the downstream side of the drive device in second flow path 2121 is equal to or higher than the temperature of power storage device 2112. The temperature of power storage device 2112 is detected, for example, by a temperature sensor 2181 provided in power storage device 2112. The temperature of the heat medium flowing through the portion on the downstream side of the drive device in second flow path 2121 is detected, for example, by a temperature sensor 2182 provided at an inlet portion of switching device 2170 in first flow path 2121.

Alternatively, the heat receiving condition may be set as a condition that a prescribed time period has elapsed since the temperature rise in power storage device 2112 started. In other words, second pump 2122 may be driven with a delay from the temperature rise in power storage device 2112. In this case, the prescribed time period may be set as a time period during which the temperature of the heat medium flowing into first port P1 of switching device 2170 from second flow path 2121 become approximately equal to the temperature of power storage device 2112.

As described above, in the present embodiment, during the self-heating of power storage device 2112, first circuit 2110 and second circuit 2120 are formed, and each of third flow path 2131 and fourth flow path 2141 is disconnected from first circuit 2110 and second circuit 2120. Thus, the heat received by the heat medium from the drive device in second flow path 2121 is effectively supplied to power storage device 2112. This makes it possible to achieve both effective use of the heat generated from the drive device and efficient self-heating of power storage device 2112.

It will be understood by those skilled in the art that the exemplary embodiments described above are specific examples of the following aspects.

### [Aspect 1]

A thermal management system provided in electrical equipment, the thermal management system including:
a first flow path, a second flow path, a third flow path, and a fourth flow path, a heat medium being able to flow through the first flow path, the second flow path, the third flow path, and the fourth flow path;
a power storage device that exchanges heat with the heat medium flowing through the first flow path;
a drive device that exchanges heat with the heat medium flowing through the second flow path to supply drive power to the electrical equipment;
a radiator provided in the third flow path;
a chiller provided in the fourth flow path; and
a switching device that is capable of switching a state of connection between the first flow path, the second flow path, the third flow path, and the fourth flow path, wherein
when the power storage device is raised in temperature, the switching device disconnects the third flow path from other flow paths, forms a circuit in which the heat medium circulates through the first flow path and the second flow path, and forms a circuit in which the heat medium circulates through the fourth flow path.

In this thermal management system, when the power storage device is raised in temperature, the heat generated by the activation of the drive device is supplied to the power storage device through the heat medium flowing through the first and second flow paths. Thus, the power storage device is effectively raised in temperature, and cooling of the heat medium flowing through the fourth flow path by the radiator is suppressed. Therefore, it is possible to achieve both effective use of the heat generated from the drive device and efficient temperature rise in the power storage device.

### [Aspect 2]

The thermal management system according to Aspect 1, wherein, during a temperature rise in the power storage device, when a temperature of the power storage device becomes higher than a set temperature, the switching device disconnects the first flow path from other flow paths, forms a circuit in which the heat medium circulates through the second flow path and the third flow path, and forms a circuit in which the heat medium circulates through only the fourth flow path.

In this aspect, since the heat generated by the activation of the drive device is supplied to the power storage device through the heat medium, the power storage device is effectively raised in temperature.

### [Aspect 3]

A thermal management system provided in electrical equipment, the thermal management system including:
a compressor that compresses a working medium;
an expansion valve that expands the working medium discharged from the compressor;
a heat exchanger that exchanges heat between the working medium flowing out of the expansion valve and a heat medium;
a first circulation flow path through which the working medium circulates, the first circulation flow path connecting in an order of the compressor, the expansion valve, and the heat exchanger;
a power storage device connected to the first circulation flow path to exchange heat with the working medium flowing through a portion between the compressor and the expansion valve in the first circulation flow path;
a power storage device bypass flow path connected to the first circulation flow path to bypass the power storage device;
a condenser that condenses the working medium discharged from the compressor, the condenser being provided in the power storage device bypass flow path;
a pump that pressurizes the heat medium flowing out of the heat exchanger;
a radiator that cools the heat medium discharged from the pump;
a second circulation flow path through which the heat medium circulates, the second circulation flow path connecting in an order of the heat exchanger, the pump, and the radiator;
a drive device that supplies drive power to the electrical equipment, the drive device being connected to the second circulation flow path to exchange heat with the heat medium flowing through a portion between the radiator and the heat exchanger in the second circulation flow path;
a radiator bypass flow path connected to the second circulation flow path to bypass the radiator; and
a switching device that is capable of switching a flow path through which the working medium flows and switching a flow path through which the heat medium flows, wherein
when the power storage device is raised in temperature, the switching device disconnects the power storage device bypass flow path from the first circulation flow path, and disconnects the radiator from the second circulation flow path, and
the compressor is activated upon satisfaction of a heat receiving condition on which the working medium receives heat from the heat medium in the heat exchanger.

In this aspect, when the power storage device is raised in temperature, the power storage device bypass flow path is disconnected from the first circulation flow path, and the radiator is disconnected from the second circulation flow path. Thus, the heat of the working medium discharged from the compressor is effectively supplied to the power storage device, and the heat generated by the drive device is effectively supplied to the power storage device through the heat medium, the heat exchanger, and the working medium. Therefore, it is possible to achieve both effective use of the heat generated from the drive device and efficient temperature rise in the power storage device.

### [Aspect 4]

The thermal management system according to Aspect 3, wherein the heat receiving condition is set as a condition that a prescribed time period has elapsed since activation of at least one of the pump and the drive device.

### [Aspect 5]

The thermal management system according to Aspect 3, wherein the heat receiving condition is set as a condition that a temperature of the heat medium flowing into the heat exchanger is equal to or higher than a temperature of the working medium flowing into the heat exchanger.

### [Aspect 6]

A thermal management system provided in electrical equipment, the thermal management system including:
a first flow path, a second flow path, a third flow path, and a fourth flow path, a heat medium being able to flow through the first flow path, the second flow path, the third flow path, and the fourth flow path;
a power storage device that exchanges heat with the heat medium flowing through the first flow path;
a drive device that exchanges heat with the heat medium flowing through the second flow path to supply drive power to the electrical equipment;
a radiator provided in the third flow path;
a chiller provided in the fourth flow path; and
a switching device that is capable of switching a state of connection between the first flow path, the second flow path, the third flow path, and the fourth flow path, wherein
the first flow path and the second flow path are connected to the switching device to be parallel to each other, and
when the power storage device is raised in temperature, the switching device forms a first circuit in which the heat medium circulates through the first flow path and the switching device, forms a second circuit in which the heat medium circulates through the second flow path and the switching device, and disconnects each of the third flow path and the fourth flow path from the first circuit and the second circuit.

In this aspect, when the power storage device is raised in temperature, the first circuit and the second circuit are formed, and each of the third flow path and the fourth flow path is disconnected from the first circuit and the second circuit. Thus, the heat received by the heat medium from the drive device in the second flow path is effectively supplied to the power storage device. Therefore, it is possible to achieve both effective use of the heat generated from the drive device and efficient temperature rise in the power storage device.

### [Aspect 7]

The thermal management system according to Aspect 6, further including:
a first pump provided in the first flow path; and
a second pump provided in the second flow path, wherein
the second pump is activated upon satisfaction of a heat receiving condition on which the power storage device receives heat from the heat medium.

### [Aspect 8]

The thermal management system according to Aspect 7, wherein the heat receiving condition is set as a condition that a prescribed time period has elapsed since start of a temperature rise in the power storage device.

### [Aspect 9]

The thermal management system according to Aspect 7, wherein the heat receiving condition is set as a condition that a temperature of the heat medium flowing through a portion on a downstream side of the drive device in the second flow path is equal to or higher than a temperature of the power storage device.

It should be understood that the embodiments disclosed herein are illustrative and non-restrictive in every respect. The scope of the present disclosure is defined by the terms of the claims rather than the above description of the embodiments, and includes any modifications within the meaning and scope equivalent to terms of the claims.

### REFERENCE SIGNS LIST

1, 2, 3 thermal management system, 1a electrically powered vehicle (electrical equipment), 11 first closed circuit, 12 second closed circuit, 13 third closed circuit, 14 fourth closed circuit, 15 fifth closed circuit, 16 sixth closed circuit, 17 seventh closed circuit, 18 eighth closed circuit, 19 ninth closed circuit, 100, 200, 300, 400, 1000, 2000 thermal management circuit, 110 high-temperature circuit, 111 water pump (pump), 114 heater core, 120, 231 radiator, 121 high-temperature radiator, 122 low-temperature radiator, 130a, 230a, 230b flow path (third flow path), 130b, 260a, 260b flow path (second flow path), 133, 263 PCU (drive device), 134, 264 oil cooler (drive device), 140, 250 condenser, 150, 240 refrigeration cycle, 151, 241 compressor, 160, 220 chiller, 170a, 210a, 210b flow path (fourth flow path), 170b, 270a, 270b flow path (first flow path), 171, 261 water pump (pump), 173, 272 battery (power storage device), 175, 273 battery temperature sensor, 180, 190 five-way valve (switching device), 280 eight-way valve, 380, 390 six-way valve (switching device), 500 ECU (controller), 600 HMI, 1100 first thermal management system, 1101 compressor, 1102 expansion valve, 1103 heat exchanger, 1104 in-vehicle evaporator, 1105 gas-liquid separator, 1106 electronic expansion valve, 1107 in-vehicle condenser, 1108 heater, 1109 expansion opening/closing valve, 1110 power storage device (battery), 1150 first circulation flow path, 1151 power storage device bypass flow path, 1152 heat exchanger bypass flow path, 1153 in-vehicle evaporator bypass flow path, 1171 first opening/closing valve, 1172 second opening/closing valve, 1173 third opening/closing valve, 1200 second thermal management system, 1201 pump, 1202 radiator, 1203 fan, 1210 drive device, 1250 second circulation flow path, 1251 radiator bypass flow path, 1271 three-way valve, 2100 heat medium circuit, 2110 first circuit, 2111 first flow path, 2112 power storage device (battery), 2113 first pump, 2120 second circuit, 2121 second flow path, 2122 second pump, 2131 third flow path, 2132 radiator, 2133 reservoir tank, 2141 fourth flow path, 2142 chiller, 2200 refrigeration circuit, 2201 compressor, 2202 condenser, 2203 first expansion valve, 2204 in-vehicle evaporator, 2205 second expansion valve, 2206 chiller, 2250 circulation flow path, 2251 in-vehicle evaporator bypass flow path.

## Claims

1. A thermal management system provided in electrical equipment, the thermal management system comprising:
a first flow path, a second flow path, a third flow path, and a fourth flow path, a heat medium being able to flow through the first flow path, the second flow path, the third flow path, and the fourth flow path;
a power storage device that exchanges heat with the heat medium flowing through the first flow path;
a drive device that exchanges heat with the heat medium flowing through the second flow path to supply drive power to the electrical equipment;
a radiator provided in the third flow path;
a chiller provided in the fourth flow path; and
a switching device that is capable of switching a state of connection between the first flow path, the second flow path, the third flow path, and the fourth flow path, wherein
when the power storage device is raised in temperature, the switching device disconnects the third flow path from other flow paths, forms a circuit in which the heat medium circulates through the first flow path and the second flow path, and forms a circuit in which the heat medium circulates through the fourth flow path.

2. The thermal management system according to claim 1, wherein, during a temperature rise in the power storage device, when a temperature of the power storage device becomes higher than a set temperature, the switching device disconnects the first flow path from other flow paths, forms a circuit in which the heat medium circulates through the second flow path and the third flow path, and forms a circuit in which the heat medium circulates through only the fourth flow path.

3. A thermal management system provided in electrical equipment, the thermal management system comprising:
a compressor that compresses a working medium;
an expansion valve that expands the working medium discharged from the compressor;
a heat exchanger that exchanges heat between the working medium flowing out of the expansion valve and a heat medium;
a first circulation flow path through which the working medium circulates, the first circulation flow path connecting in an order of the compressor, the expansion valve, and the heat exchanger;
a power storage device connected to the first circulation flow path to exchange heat with the working medium flowing through a portion between the compressor and the expansion valve in the first circulation flow path;
a power storage device bypass flow path connected to the first circulation flow path to bypass the power storage device;
a condenser that condenses the working medium discharged from the compressor, the condenser being provided in the power storage device bypass flow path;
a pump that pressurizes the heat medium flowing out of the heat exchanger;
a radiator that cools the heat medium discharged from the pump;
a second circulation flow path through which the heat medium circulates, the second circulation flow path connecting in an order of the heat exchanger, the pump, and the radiator;
a drive device that supplies drive power to the electrical equipment, the drive device being connected to the second circulation flow path to exchange heat with the heat medium flowing through a portion between the radiator and the heat exchanger in the second circulation flow path;
a radiator bypass flow path connected to the second circulation flow path to bypass the radiator; and
a switching device that is capable of switching a flow path through which the working medium flows and switching a flow path through which the heat medium flows, wherein
when the power storage device is raised in temperature, the switching device disconnects the power storage device bypass flow path from the first circulation flow path, and disconnects the radiator from the second circulation flow path, and
the compressor is activated upon satisfaction of a heat receiving condition on which the working medium receives heat from the heat medium in the heat exchanger.

4. The thermal management system according to claim 3, wherein the heat receiving condition is set as a condition that a prescribed time period has elapsed since activation of at least one of the pump and the drive device.

5. The thermal management system according to claim 3, wherein the heat receiving condition is set as a condition that a temperature of the heat medium flowing into the heat exchanger is equal to or higher than a temperature of the working medium flowing into the heat exchanger.

6. A thermal management system provided in electrical equipment, the thermal management system comprising:
a first flow path, a second flow path, a third flow path, and a fourth flow path, a heat medium being able to flow through the first flow path, the second flow path, the third flow path, and the fourth flow path;
a power storage device that exchanges heat with the heat medium flowing through the first flow path;
a drive device that exchanges heat with the heat medium flowing through the second flow path to supply drive power to the electrical equipment;
a radiator provided in the third flow path;
a chiller provided in the fourth flow path; and
a switching device that is capable of switching a state of connection between the first flow path, the second flow path, the third flow path, and the fourth flow path, wherein
the first flow path and the second flow path are connected to the switching device to be parallel to each other, and
when the power storage device is raised in temperature, the switching device forms a first circuit in which the heat medium circulates through the first flow path and the switching device, forms a second circuit in which the heat medium circulates through the second flow path and the switching device, and disconnects each of the third flow path and the fourth flow path from the first circuit and the second circuit.

7. The thermal management system according to claim 6, further comprising:
a first pump provided in the first flow path; and
a second pump provided in the second flow path, wherein
the second pump is activated upon satisfaction of a heat receiving condition on which the power storage device receives heat from the heat medium.

8. The thermal management system according to claim 7, wherein the heat receiving condition is set as a condition that a prescribed time period has elapsed since start of a temperature rise in the power storage device.

9. The thermal management system according to claim 7, wherein the heat receiving condition is set as a condition that a temperature of the heat medium flowing through a portion on a downstream side of the drive device in the second flow path is equal to or higher than a temperature of the power storage device.
